# EUROPÄISCHE PATENTSCHRIFT

(11) **EP 3 119 576 B1**
(45) Veröffentlichungstag und Bekanntmachung des Hinweises auf die Patenterteilung: **08.05.2019**
(21) Anmeldenummer: 15711137.8
(22) Anmeldetag: 18.03.2015
(51) Int. Cl.: B29C 44/34, B65G 53/46, B29C 45/18

(54) **SYSTEM ZUM SCHLEUSEN, DOSIEREN UND SPRITZGIESSEN VON MATERIAL**
SYSTEM FOR SLUICING, METERING AND INJECTION-MOULDING MATERIAL
SYSTEME DE SASSEMENT, DE DOSAGE ET DE MOULAGE PAR INJECTION D'UNE MATIERE

(30) Priorität: 19.03.2014 DE 102014205102
(43) Veröffentlichungstag der Anmeldung: 25.01.2017
(73) Patentinhaber: Volkswagen AG, 38440 Wolfsburg (DE)
(72) Erfinder: HOMEY, Eric, 38444 Wolfsburg (DE); HAIN, Jörg, 38518 Gifhorn (DE); SCHMIEMANN, Achim, 38533 Vordorf (DE); QUABECK, Till, 38126 Braunschweig (DE); SCHÜTZ, Christine, 38108 Braunschweig (DE); MÜLLER, Michael, 39646 Oebisfelde (DE)
(74) Vertreter: Gulde & Partner
(86) Internationale Anmeldenummer: PCT/EP2015/055703
(87) Internationale Veröffentlichungsnummer: WO 2015/140219

(56) Entgegenhaltungen:
- DE-A1- 1 903 681
- DE-A1-102005 033 731
- GB-A- 1 127 383
- JP-A- H0 885 129
- US-A1- 2002 014 709

## Beschreibung

Die Erfindung betrifft ein System zum Schleusen, Dosieren und Spritzgießen von Material und betrifft insbesondere eine Materialschleuse und ein Verfahren zum Schleusen von Material zwischen Bereichen unterschiedlicher Druckniveaus, eine Dosieranordnung mit einer solchen Materialschleuse, eine Spritzgießanordnung mit einer solchen Dosieranordnung sowie ein Spritzgießverfahren zum Spritzgießen eines geschäumten Formteils unter Verwendung des Verfahrens zum Schleusen von Material.

Aus DE 10 2008 037 787 B4 ist eine Materialschleuse zum Schleusen von Schüttgut zwischen Bereichen unterschiedlicher Druckniveaus bekannt, wobei die Materialschleuse eine Anordnung von mindestens drei untereinander angeordneten Muffenventilen bzw. Quetschventilen und sowie mindestens zwei zwischen den Muffenventilen angeordnete Schleusungskammern umfasst, die von hohlzylindrischen Festkörpern gebildet sind. Die Anordnung von Muffenventilen und die Schleusungskammern bilden zusammen eine Schleusungspassage, die einen Passageneingang zum Verbinden mit einem ein erstes Druckniveau aufweisenden ersten Bereich und einen Passagenausgang aufweist zum Verbinden mit einem ein sich von dem ersten Druckniveau unterscheidendes zweites Druckniveau aufweisenden zweiten Bereich, wobei der Passageneingang und der Passagenausgang in einer Längsrichtung der Schleusungspassage mit Abstand voneinander angeordnet sind. Zum Schleusen des Schüttgutes werden die Muffenventile in einem vorgegebenen Steuermuster mittels Druckluftbeaufschlagung geöffnet, teilweise geschlossen und vollständig gasdicht geschlossen, so dass das Schüttgut per Schwerkraft aus dem ersten Bereich in die erste Schleusungskammer, aus der ersten Schleusungskammer in die zweite Schleusungskammer und schließlich aus der zweiten Schleusungskammer in den zweiten Bereich rieseln kann. Bei dieser bekannten Materialschleuse kann durch Variation des Steuerdrucks der Muffenventile eine Menge des mit einem Zyklus geschleusten Schüttgutes verändert werden. Durch die Vielzahl der anzusteuernden und jeweils Gasdichtheit zu gewährleistenden Komponenten weist diese bekannte Materialschleuse jedoch eine hohe Komplexität auf und kann ein hohes Potenzial für Störungen bieten.

Aus DE 10 2009 032 319 A1 ist eine Spritzgießanordnung zur Herstellung eines Leichtmetallformteils bekannt, welche eine Spritzgießvorrichtung mit einem Materialeingang zum Zuführen von Leichtmetall, einem Plastifizierungsbereich zum Plastifizieren von über den Materialeingang zugeführtem Leichtmetall, um ein spritzgießbereites Spritzgut herzustellen, und einem Spritzgutausgang zum Einspritzen des Spritzgutes in eine das Leichtmetallformteil definierende Spritzgießform, und eine Dosieranordnung aufweist, die eingerichtet ist, gewünschte Mengen von Leichtmetall aus einem ein erstes Druckniveau aufweisenden Bereich dosiert an den Materialeingang zu überführen. Die Dosieranordnung weist an ihrem Eingang eine Schleuse auf, nach welcher in Beschickungsrichtung ein sich von dem ersten Druckniveau unterscheidendes zweite Druckniveau in Form eines Schutzgases oder Vakuums besteht und durch welche hindurch das Leichtmetall geschleust wird, um zum Materialeingang zu gelangen. Wie die Schleuse dieser bekannten Spritzgießanordnung aufgebaut ist, lässt sich aus dem genannten Dokument nicht entnehmen.

Die JP H08 85129 A offenbart eine Vorrichtung und ein Verfahren zur Herstellung einer Schaumstruktur.

Die DE 19 03 681 A1 beschreibt ein Verfahren und eine Vorrichtung zur Herstellung eines Schaumprodukts. Dabei wird ein geschmolzenes Harz von einem Gas durchsetzt.

Die DE 1 903 681 A1 offenbart ein Verfahren und eine Vorrichtung zum Dosieren und zum Einbringen von Stoffen in Räume unterschiedlichen Drucks, wobei eine Abdichtung von Dosierkammern, in denen der Stoff gefördert wird, unter Einfluss einer Doppelbewegung auch gasdicht erfolgen kann.

In der GB 1 127 383 A ist ein Zylinder mit einer Öffnung und einer Auslassöffnung beschrieben. Die Öffnung verbindet den Zylinder mit einem Container, der unter Vakuum gesetzt werden kann. Die Auslassöffnung verbindet den Zylinder mit einer beispielsweise aus Luft bestehenden Umgebung. Durch eine weitere Öffnung im Zylinder ist auch ein unter hohem Druck stehendes Gas durch den Zylinder und die Auslassöffnung leitbar. Somit ergeben sich ein erster Bereich, umfassend den Container und ein Verbindungsrohr, sowie ein zweiter Bereich. Durch Schutzgas oder Vakuum in dem ersten Bereich und Luft oder Gasstrom unter hohem Druck im zweiten Bereich können sich unterschiedliche Druckniveaus ergeben. Die Öffnung und die Auslassöffnung sind in einer Längsrichtung des Zylinders mit Abstand voneinander angeordnet. Eine Kolbenanordnung, umfassend Zylinder, bildet in dem Zylinder eine Schleusungskammer. Diese Schleusungskammer ist auch in Längsrichtung des Zylinders von einer Aufnahmeposition in eine Ausgabeposition verlagerbar.

DE 10 2005 033 731 A1 offenbart eine Vorrichtung und ein Verfahren zur Herstellung physikalisch getriebener Schäume. Es ist vorgesehen, dass eine Schleusenkammer vor dem Öffnen zum Einbringen eines Werkstoffes und nach dem Schließen einer Verbindung mit einer weiteren Kammer entlüftet wird, so dass ein in der Kammer herrschender Druck abgesenkt werden kann.

Der Erfindung liegt die Aufgabe zugrunde, ein System zum Schleusen, Dosieren und Spritzgießen von Material wie insbesondere Schüttgut und speziell Granulat bereitzustellen, welches einfach aufgebaut ist und zuverlässig einen Gasaustausch zwischen unterschiedliche Druckniveaus aufweisenden Bereichen, zwischen denen das Material zu transportieren ist, verhindert.

Dies wird mit einer Materialschleuse gemäß Anspruch 1, einem Verfahren zum Schleusen von Material gemäß Anspruch 4, einer Dosieranordnung gemäß Anspruch 5, einer Spritzgießanordnung gemäß Anspruch 6 und einem Spritzgießverfahren gemäß Anspruch 8 erreicht. Weiterbildungen der Erfindung sind in den jeweiligen abhängigen Ansprüchen definiert.

Gemäß der Erfindung weist eine Materialschleuse zum Schleusen von Material zwischen Bereichen unterschiedlicher Druckniveaus auf: eine Schleusungspassage, die einen Passageneingang zum insbesondere gasdichten Verbinden mit einem ein erstes Druckniveau aufweisenden ersten Bereich und einen Passagenausgang zum insbesondere gasdichten Verbinden mit einem ein sich von dem ersten Druckniveau unterscheidendes zweites Druckniveau aufweisenden zweiten Bereich aufweist, wobei der Passageneingang und der Passagenausgang in einer Längsrichtung der Schleusungspassage mit Abstand voneinander angeordnet sind, und eine Kolbenanordnung, die eingerichtet ist, in der Schleusungspassage eine Schleusungskammer zu definieren, so dass die Schleusungskammer zwei in Längsrichtung der Schleusungspassage entgegengesetzte Längsenden hat, welche gasdicht gegenüber einer Innenfläche der Schleusungspassage abgedichtet sind, wobei die Kolbenanordnung in Längsrichtung der Schleusungspassage verschiebbar ist, so dass die Schleusungskammer zwischen einer Aufnahmeposition, in der die Schleusungskammer mit dem Passageneingang in Verbindung steht und gasdicht von dem Passagenausgang getrennt ist, so dass über den Passageneingang Material aus dem ersten Bereich in die Schleusungskammer überführbar ist, und einer Ausgabeposition verlagerbar ist, in der die Schleusungskammer mit dem Passagenausgang in Verbindung steht und gasdicht von dem Passageneingang getrennt ist, so dass das Material aus der Schleusungskammer in den zweiten Bereich überführbar ist.

Gemäß der Erfindung sind die beiden Bereiche unterschiedlicher Druckniveaus insbesondere nur über die Materialschleuse miteinander verbunden und ansonsten gasdicht voneinander getrennt. Gemäß der Erfindung können der erste und der zweite Bereich jeweils Umgebungsdruck (atmosphärischen Druck) oder Überdruck oder Unterdruck gegenüber dem Umgebungsdruck aufweisen und kann das jeweilige Druckniveau in den beiden Bereichen durch Luft, Vakuum oder ein Gas oder Gasgemisch anders als Luft realisiert sein. Gemäß der Erfindung kann das zu schleusende Material in einer beliebigen Form von fest, gasförmig, flüssig oder Zwischenzuständen davon bereitgestellt sein. Bevorzugt ist das zu schleusende Material als Feststoff, insbesondere als Schüttgut und bevorzugt als Granulat ausgebildet. Gemäß der Erfindung können das Überführen von Material aus dem ersten Bereich in die Schleusungskammer und das Überführen von Material aus der Schleusungskammer in den zweiten Bereich jeweils z.B. mittels Schwerkraft oder z.B. auch mechanisch oder fluidisch angetrieben realisiert werden.

Durch die erfindungsgemäß vorgesehene Kolbenanordnung, welche verschiebbar in der Schleusungspassage angeordnet ist und welche die längsendenseitig gasdicht abgedichtete, verlagerbare Schleusungskammer definieren kann, weist die Materialschleuse bei zuverlässiger Verhinderung eines Gasaustauschs zwischen den Bereichen unterschiedlicher Druckniveaus eine geringe Komplexität auf und ist somit einfach aufgebaut.

Gemäß der Erfindung ist bei der Materialschleuse die Kolbenanordnung so in Längsrichtung der Schleusungspassage verschiebbar, dass die Schleusungskammer in eine in Längsrichtung der Schleusungspassage zwischen der Aufnahmeposition und der Ausgabeposition angeordnete Zwischenposition verbringbar ist, in der die Schleusungskammer gasdicht sowohl von dem Passageneingang als auch dem Passagenausgang getrennt ist. Gemäß der Erfindung weist die Materialschleuse außerdem eine Gasevakuierungsvorrichtung wie eine Vakuumpumpe auf, welche in der Zwischenposition an die Schleusungspassage angeschlossen ist, so dass mittels der Gasevakuierungsvorrichtung in der Zwischenposition ein in der Schleusungskammer befindliches erstes Gas aus der Schleusungskammer evakuiert werden kann. Bevorzugt ist die Gasevakuierungsvorrichtung durch die Wandung des die Schleusungspassage definierenden Schleusenteils hindurch an die Schleusungspassage angeschlossen.

Dies gewährleistet auf sichere Weise die Verhinderung eines Gasaustausches zwischen erstem und zweitem Bereich über die Schleusungskammer und die Schleusungspassage.

Durch die Gasevakuierungsvorrichtung kann in der Zwischenposition Gas (wie zum Beispiel Luft), welches aus dem ersten Bereich mit in die Schleusungskammer eingetragen wurde, aus der Schleusungskammer evakuiert werden, so dass ein Eintrag dieses Gases in den zweiten Bereich verhindert wird.

Bevorzugt ist in der Aufnahmeposition der Schleusungskammer der Passagenausgang bevorzugt bewirkt durch die Kolbenanordnung entweder vollständig gasdicht verschlossen oder nur mit einem gasdicht abgeschlossenen Volumenanteil der Schleusungspassage in Verbindung. In ähnlicher Weise kann in der Ausgabeposition der Schleusungskammer der Passageneingang bevorzugt bewirkt durch die Kolbenanordnung entweder vollständig gasdicht verschlossen oder nur mit einem gasdicht abgeschlossenen Volumenanteil der Schleusungspassage in Verbindung sein.

Gemäß einer Ausführungsform der Erfindung ist bei der Materialschleuse der Passagenausgang auf einem tieferen Höhenniveau angeordnet als der Passageneingang. Dies begünstigt in vorteilhafter Weise das Entladen des Materials aus der Schleusungskammer durch Schwerkraft. Bevorzugt weist die Schleusungspassage vom Passageneingang zum Passagenausgang ein Gefälle auf, wodurch in vorteilhafter Weise der Transport des Materials von der Aufnahmeposition zur Ausgabeposition der Schleusungskammer durch Schwerkraft begünstigt wird.

Bevorzugt ist die Schleusungspassage in einem rohrförmigen Schleusenteil mit insbesondere kreiszylindrischem Querschnitt ausgebildet. Dies vereinfacht einerseits die Herstellung von Schleusenpassage und Kolbenanordnung und vereinfacht andererseits die gasdichte Abdichtung der beiden Längsenden der Schleusungskammer gegenüber der Innenfläche der Schleusungspassage.

Bevorzugt sind der Passageneingang und der Passagenausgang jeweils als Öffnung in der Wandung des die Schleusungspassage aufweisenden Schleusenteils ausgebildet, wobei der Passageneingang und der Passagenausgang in Bezug auf einen Durchmesser des Schleusenteils bevorzugt diametral entgegengesetzt angeordnet sind. Noch bevorzugter weist bei der erfindungsgemäßen Materialschleuse der Passageneingang nach vertikal oben und weist der Passagenausgang nach vertikal unten, wodurch ein via Schwerkraft Befüllen und Entleeren der Schleusungskammer vorteilhaft unterstützt wird.

Gemäß noch einer Ausführungsform der Erfindung weist die Materialschleuse außerdem eine Gaszuführvorrichtung wie z.B. eine gasbefüllte Druckflasche oder eine gasfördernde Druckpumpe auf, welche in der Zwischenposition an die Schleusungspassage angeschlossen ist, so dass mittels der Gaszuführvorrichtung in der Zwischenposition ein sich von dem ersten Gas unterscheidendes zweites Gas mit einem gewünschten Druckniveau in die Schleusungskammer eingebracht werden kann. Bevorzugt ist die Gaszuführvorrichtung durch die Wandung des die Schleusungspassage definierenden Schleusenteils hindurch an die Schleusungspassage angeschlossen.

Durch die Gaszuführvorrichtung kann in der Zwischenposition bevorzugt das Gas, welches sich im zweiten Bereich befindet, bevorzugt mit in etwa dem (zweiten) Druckniveau des zweiten Bereichs in die Schleusungskammer eingebracht werden, wodurch bei Ausgabe des Materials aus dem Passagenausgang ein durch Einströmen von Gas in die Schleusungskammer verursachter Druckverlust im zweiten Bereich vermieden werden kann.

Gemäß einer weiteren Ausführungsform der Erfindung weist bei der Materialschleuse die Kolbenanordnung einen ersten Kolben und einen zweiten Kolben auf, die jeweils einen gasdicht gegenüber der Innenfläche der Schleusungspassage abgedichteten Kolbenkopf haben und die relativ zueinander in Längsrichtung der Schleusungspassage in eine erste Stellung, in der die beiden Kolbenköpfe mit Abstand in Längsrichtung der Schleusungspassage voneinander angeordnet sind, so dass zwischen den Kolbenköpfen die Schleusungskammer gebildet ist, und in eine zweite Stellung verschiebbar sind, in der die beiden Kolbenköpfe abstandslos in Längsrichtung der Schleusungspassage aneinander angrenzen, so dass zwischen den Kolbenköpfen keine Schleusungskammer gebildet ist.

Auf diese Weise kann nach in den zweiten Bereich Entleeren des Materials aus der Schleusungskammer ein Volumen der Schleusungskammer auf null reduziert werden und kann in der Schleusungskammer befindliches Gas bei dieser Reduzierung in den zweiten Bereich abgegeben werden, wodurch ein Gasverlust bzw. Gasaustrag aus dem zweiten Bereich und ein Gaseintrag des Gases aus dem zweiten Bereich in den ersten Bereich sicher vermieden werden können.

Gemäß noch einer weiteren Ausführungsform der Erfindung weist bei der Materialschleuse zumindest der zweite Kolben einen zweiten Kolbenkopf auf, der gasdicht gegenüber der Innenfläche der Schleusungspassage abdichtet und der so mit Abstand in Längsrichtung der Schleusungspassage von dem die Schleusungskammer mitdefinierenden Kolbenkopf des zweiten Kolbens angeordnet ist, dass dieser zweite Kolbenkopf in der Aufnahmeposition der Schleusungskammer den Passagenausgang entweder vollständig gasdicht verschließt oder bewirkt, dass der Passagenausgang nur mit einem gasdicht abgeschlossenen kleinen Volumenanteil der Schleusungspassage in Verbindung steht.

Durch den zweiten Kolbenkopf kann somit zuverlässig ein Gasaustausch zwischen zweitem Bereich und nicht in die Schleusungskammer integriertem Volumenanteil der Schleusungspassage verhindert bzw. minimiert werden.

Gemäß noch einer weiteren Ausführungsform der Erfindung weist die Materialschleuse außerdem eine Schleuseneingangspassage, die ein erstes Eingangspassagenende zum insbesondere gasdichten Verbinden mit dem ersten Bereich und ein zweites Eingangspassagenende aufweist, das insbesondere gasdicht an den Passageneingang angeschlossen ist, und eine Schleusenausgangspassage auf, die ein erstes Ausgangspassagenende zum insbesondere gasdichten Verbinden mit dem zweiten Bereich und ein zweites Ausgangspassagenende aufweist, das insbesondere gasdicht an den Passagenausgang angeschlossen ist.

Die Schleuseneingangspassage und die Schleusenausgangspassage dienen in vorteilhafter Weise dem Zuführen des Materials in die Schleusungskammer bzw. dem Abführen des Materials aus der Schleusungskammer. Bevorzugt verlaufen die Schleuseneingangspassage und die Schleusenausgangspassage jeweils annähernd vertikal, was vorteilhaft ein via Schwerkraft Befüllen und Entleeren der Schleusungskammer unterstützt.

Bevorzugt weist die Materialschleuse ein erstes (wie oben bereits erwähntes) Schleusenteil, in dem die Schleusungspassage ausgebildet ist, ein zweites Schleusenteil, das mit dem ersten Schleusenteil verbunden ist und in dem die Schleuseneingangspassage ausgebildet ist, und ein drittes Schleusenteil auf, das mit dem ersten Schleusenteil verbunden ist und in dem die Schleusenausgangspassage ausgebildet ist. Bevorzugt sind das zweite und das dritte Schleusenteil jeweils integral an das erste Schleusenteil angeformt. Bevorzugt sind das erste, zweite und dritte Schleusenteil als Bestandteile eines einstückigen Gehäuses ausgebildet. Bevorzugt weisen das erste, zweite und dritte Schleusenteil jeweils einen kreiszylindrischen Querschnitt auf. Bevorzugt weist die Schleusungspassage einen kreisförmigen Querschnitt auf, wobei insbesondere auch die Schleuseneingangspassage und die Schleusenausgangspassage jeweils einen kreisförmigen Querschnitt aufweisen. Noch bevorzugter sind das erste, zweite und dritte Schleusenteil jeweils rohrförmig ausgebildet.

Gemäß der Erfindung weist ein Verfahren zum Schleusen von Material zwischen Bereichen unterschiedlicher Druckniveaus (Materialschleusungsverfahren), insbesondere unter Verwendung einer Materialschleuse gemäß einer, mehreren oder allen zuvor beschriebenen Ausführungsformen der Erfindung in jeder denkbaren Kombination, zumindest die folgenden Schritte auf: Bereitstellen einer verlagerbaren Schleusungskammer in einer Aufnahmeposition, so dass die Schleusungskammer mit einem ein erstes Druckniveau aufweisenden ersten Bereich insbesondere gasdicht in Verbindung steht und ansonsten gasdicht verschlossen ist, Befüllen der Schleusungskammer mit Material aus dem ersten Bereich, Verlagern der Schleusungskammer in eine Ausgabeposition, so dass die Schleusungskammer mit einem ein sich von dem ersten Druckniveau unterscheidendes zweites Druckniveau aufweisenden zweiten Bereich insbesondere gasdicht in Verbindung steht und ansonsten gasdicht verschlossen ist, und Entleeren des Materials aus der Schleusungskammer in den zweiten Bereich.

Gemäß der Erfindung sind die beiden Bereiche unterschiedlicher Druckniveaus insbesondere gasdicht voneinander getrennt. Gemäß der Erfindung können der erste und der zweite Bereich jeweils Umgebungsdruck (atmosphärischen Druck) oder Überdruck oder Unterdruck gegenüber dem Umgebungsdruck aufweisen und kann das jeweilige Druckniveau in den beiden Bereichen durch Luft, Vakuum oder ein Gas oder Gasgemisch anders als Luft realisiert sein. Gemäß der Erfindung kann das zu schleusende Material in einer beliebigen Form von fest, gasförmig, flüssig oder Zwischenzuständen davon bereitgestellt werden. Bevorzugt ist das zu schleusende Material als Feststoff, insbesondere als Schüttgut und bevorzugt als Granulat ausgebildet. Gemäß der Erfindung können das Überführen von Material aus dem ersten Bereich in die Schleusungskammer und das Überführen von Material aus der Schleusungskammer in den zweiten Bereich jeweils z.B. mittels Schwerkraft oder z.B. auch mechanisch oder fluidisch angetrieben realisiert werden.

Dadurch, dass gemäß der Erfindung zum Schleusen des Materials lediglich eine wie oben definierte verlagerbare Schleusungskammer verwendet wird, kann das Schleusen des Materials bei zuverlässiger Verhinderung eines Gasaustauschs zwischen den Bereichen unterschiedlicher Druckniveaus auf sehr einfache Weise realisiert werden.

Gemäß der Erfindung wird bei dem Materialschleusungsverfahren die Schleusungskammer so verlagert, dass die Schleusungskammer vor Erreichen der Ausgabeposition in eine zwischen der Aufnahmeposition und der Ausgabeposition befindliche Zwischenposition verbracht wird, in der die Schleusungskammer sowohl von dem ersten Bereich als auch dem zweiten Bereich gasdicht getrennt ist, wobei in der Zwischenposition ein in der Schleusungskammer befindliches erstes Gas aus der Schleusungskammer evakuiert wird.

Dies verhindert einerseits auf sichere Weise einen Gasaustausch zwischen erstem und zweitem Bereich über die Schleusungskammer. Andererseits kann auf diese Weise in der Zwischenposition Gas (wie z.B. Luft), welches aus dem ersten Bereich mit in die Schleusungskammer eingetragen wurde, aus der Schleusungskammer evakuiert werden, so dass ein Eintrag dieses Gases in den zweiten Bereich verhindert wird.

Gemäß einer weiteren Ausführungsform der Erfindung wird bei dem Materialschleusungsverfahren in der Zwischenposition nach Evakuieren des ersten Gases ein sich von diesem unterscheidendes zweites Gas mit einem gewünschten Druckniveau in die Schleusungskammer eingebracht. Auf diese Weise kann in der Zwischenposition bevorzugt das Gas, welches sich im zweiten Bereich befindet, bevorzugt mit in etwa dem (zweiten) Druckniveau des zweiten Bereichs in die Schleusungskammer eingebracht werden, wodurch bei Ausgabe des Materials aus der Schleusungskammer ein durch Einströmen von Gas in die Schleusungskammer verursachter Druckverlust im zweiten Bereich vermieden werden kann.

Gemäß noch einer Ausführungsform der Erfindung wird bei dem Materialschleusungsverfahren nach in den zweiten Bereich Entleeren des Materials aus der Schleusungskammer ein Volumen der Schleusungskammer auf null reduziert und wird in der Schleusungskammer befindliches Gas bei dieser Reduzierung in den zweiten Bereich abgegeben. Auf diese Weise können ein Gasverlust bzw. Gasaustrag aus dem zweiten Bereich und ein Gaseintrag des Gases aus dem zweiten Bereich in den ersten Bereich sicher vermieden werden.

Gemäß der Erfindung weist eine Dosieranordnung zum Überführen gewünschter Mengen von Schüttgut aus einem ein erstes Druckniveau aufweisenden ersten Bereich in einen ein sich von dem ersten Druckniveau unterscheidendes zweites Druckniveau aufweisenden zweiten Bereich auf: eine Materialschleuse gemäß einer, mehreren oder allen zuvor beschriebenen Ausführungsformen der Erfindung in jeder denkbaren Kombination, und eine Dosiervorrichtung mit einem Schüttguteingang zum insbesondere gasdichten Verbinden mit dem ersten Bereich und einem Schüttgutausgang, der insbesondere gasdicht mit dem Passageneingang der Materialschleuse verbunden ist, wobei die Dosiervorrichtung eingerichtet ist, gewünschte Mengen von Schüttgut aus dem ersten Bereich über den Schüttguteingang aufzunehmen und dosiert über den Schüttgutausgang dem Passageneingang der Materialschleuse zuzuführen, und wobei der Passagenausgang der Materialschleuse insbesondere gasdicht mit dem zweiten Bereich verbunden ist, so dass in der Aufnahmeposition der Schleusungskammer über den Passageneingang in die Schleusungskammer überführtes Schüttgut in der Ausgabeposition der Schleusungskammer über den Passagenausgang in den zweiten Bereich überführbar ist.

Gemäß der Erfindung kann die Dosiervorrichtung z.B. einen gravimetrischen Schneckendosierer aufweisen.

Gemäß der Erfindung sind die beiden Bereiche unterschiedlicher Druckniveaus insbesondere nur über die Materialschleuse miteinander verbunden und ansonsten gasdicht voneinander getrennt. Gemäß der Erfindung können der erste und der zweite Bereich jeweils Umgebungsdruck (atmosphärischen Druck) oder Überdruck oder Unterdruck gegenüber dem Umgebungsdruck aufweisen und kann das jeweilige Druckniveau in den beiden Bereichen durch Luft, Vakuum oder ein Gas oder Gasgemisch anders als Luft realisiert sein. Gemäß der Erfindung kann das zu dosierende Schüttgut bevorzugt als Granulat ausgebildet sein.

Dadurch, dass die erfindungsgemäße Dosieranordnung die erfindungsgemäße Materialschleuse aufweist, kann bei einfachem Aufbau der Dosieranordnung zuverlässig ein Gasaustausch zwischen den Bereichen unterschiedlicher Druckniveaus verhindert werden.

Gemäß der Erfindung werden auch eine Spritzgießanordnung und ein Spritzgießverfahren zum aus Granulat Herstellen eines geschäumten Formteils bereitgestellt.

Allgemein birgt die Herstellung von Schaumspritzguss wie z.B. thermoplastischem Schaumspritzguss (TSG) Potential für den Leichtbau. Der Schaum kann dabei sowohl chemisch als auch wie gemäß der Erfindung physikalisch erzeugt werden. Im Vergleich zu kompaktem Spritzguss bieten Materialien mit Schaumstruktur u.a. Vorteile hinsichtlich Verzugsminimierung, Vermeidung von Einfallstellen, Gewichts- und damit Materialeinsparung, Wärmeisolierungseigenschaften und verbesserter Maßhaltigkeit.

Gemäß einer ersten Möglichkeit zur Herstellung von thermoplastischem Schaumspritzguss wird eine spezielle Schnecke benötigt, die eine Gasinjektion von überkritischem Gas in eine Plastifiziereinheit (also in eine Materialschmelze) ermöglicht. Dadurch kommt es zur Herstellung einer Ein-Phasen-Lösung. Beim Spritzguss in ein Werkzeug kommt es zur Expansion des Materials unter Ausbildung mikrozellulärer Schaumstruktur. Nachteilig an dieser ersten Möglichkeit ist jedoch der hohe Aufwand an Investitionskosten. Außerdem ist nachteilig, dass bedingt durch zum Gasinjizieren notwendige Einfüllstutzen eine Schneckengeometrieveränderung erforderlich ist, wodurch sich eine Beschränkung hinsichtlich der verwendbaren Spritzgießmaterialien wie Kunststoffmaterialien ergibt.

Gemäß einer zweiten Möglichkeit zur Herstellung von Schaumspritzguss wird die Gesamtheit eines Plastifizieraggregates unter eine Treibfluidatmosphäre gesetzt, so dass das Treibfluid während des Plastifiziervorgangs in das Spritzgießmaterial eindiffundieren kann. Dazu wird die Plastifiziereinheit im hinteren Bereich an der Schnecke abgedichtet und eine Drucckammerschleuse zwischen Materialtrichter und Plastifiziereinheit installiert. Gegenüber der ersten Herstellungsmöglichkeit wird somit eine Vereinfachung in der Prozessführung erreicht, so dass im Unterschied zum Kompaktspritzguss lediglich die Schnecke nach hinten abgedichtet und eine Druckkammerschleuse installiert werden muss. Ein wesentlicher Nachteil der zweiten Herstellungsmöglichkeit besteht darin, dass es bei der Gasbeladung zu einem großen Gasverlust kommen kann, was wiederum die Prozesskosten in die Höhe treibt.

Gemäß einer dritten Möglichkeit zur Herstellung von Schaumspritzguss wird ein Treibfluid direkt in das Werkzeug eingebracht. Mit Hilfe von Mischelementen im Werkzeug wird das Treibfluid mit der Materialschmelze vermischt. Es entsteht keine Ein-Phasen-Lösung, d.h. es kann keine ausreichende Durchmischung der Materialschmelze mit dem Treibfluid sichergestellt werden, wodurch die Schaumstruktur nur unregelmäßig ausgebildet wird. Für die dritte Herstellungsmöglichkeit werden zudem ein zusätzliches Aggregat zum Einspritzen des Treibfluides sowie entsprechende Mischelemente im Werkzeug benötigt.

Gemäß der Erfindung weist eine Spritzgießanordnung zum aus Granulat Herstellen eines geschäumten Formteils auf: eine Spritzgießvorrichtung mit einem Granulateingang zum Zuführen von Granulat, einem Plastifizierungsbereich zum Plastifizieren von über den Granulateingang zugeführtem Granulat, um ein spritzgießbereites Spritzgut herzustellen, und einem Spritzgutausgang zum Einspritzen des Spritzgutes in eine das Formteil definierende Spritzgießform, eine Dosieranordnung gemäß einer, mehreren oder allen zuvor beschriebenen Ausführungsformen der Erfindung in jeder denkbaren Kombination, wobei die Dosieranordnung eingerichtet ist, gewünschte Mengen von Granulat aus einem ein erstes Druckniveau aufweisenden Granulatspeicher dosiert an den Granulateingang zu überführen, wobei der Passagenausgang der Schleusungspassage der Dosieranordnung insbesondere gasdicht mit dem Granulateingang verbunden ist, und eine Gaszuführvorrichtung, die eingerichtet ist, ein Schäumungsgas zur Mischung mit dem Spritzgut zuzuführen, so dass an dem Granulateingang ein gegenüber dem ersten Druckniveau erhöhtes zweites Druckniveau an Schäumungsgas bereitgestellt wird.

Gemäß der Erfindung sind die beiden Bereiche unterschiedlicher Druckniveaus, nämlich der Granulatspeicher und der Bereich am Granulateingang, insbesondere nur über die Dosieranordnung miteinander verbunden und ansonsten gasdicht voneinander getrennt. Gemäß der Erfindung können die beiden Bereiche unterschiedlicher Druckniveaus jeweils Umgebungsdruck (atmosphärischen Druck) oder Überdruck oder Unterdruck gegenüber dem Umgebungsdruck aufweisen und kann das jeweilige Druckniveau in den beiden Bereichen durch Luft, Vakuum oder ein Gas oder Gasgemisch anders als Luft realisiert sein.

Dadurch, dass die erfindungsgemäße Spritzgießanordnung die erfindungsgemäße Dosieranordnung aufweist, kann bei einfachem Aufbau der Spritzgießanordnung zuverlässig ein Gasaustausch zwischen den beiden Bereichen unterschiedlicher Druckniveaus verhindert werden.

Gegenüber den drei o.g. Möglichkeiten zum Herstellen von Schaumspritzguss weist die erfindungsgemäße Spritzgießanordnung zusätzlich Vorteile auf bezüglich geringerer Investitionskosten für Anlagenumrüstung / gasdichte Materialschleuse, Kompatibilität zu nahezu allen Füllstoffen, da keine besondere Schneckengeometrie notwendig ist, effizienterer Prozessausgestaltung und damit geringerer Kosten sowie homogener Durchmischung von Treibfluid und Materialschmelze.

Bevorzugt ist das Granulat von Kunststoff (Kunststoffgranulat) gebildet, wobei der Kunststoff insbesondere thermoplastischer Kunststoff ist. Im Rahmen der Erfindung sind jedoch z.B. auch Granulate aus anderen Feststoffen wie Metall, insbesondere Leichtmetall, Elastomeren, Duroplasten oder anderen plastifizierbaren Feststoffen oder aus Gemischen dieser Feststoffe denkbar.

Bevorzugt weist das erste Druckniveau des Granulatspeichers Umgebungsdruck bzw. atmosphärischen Druck auf und weist das zweite Druckniveau des Bereichs am Granulateingang einen Druck von ca. 1 bis 50 bar auf. Bevorzugt wird das erste Druckniveau durch Luft realisiert. Bevorzugt wird das zweite Druckniveau durch ein inertes Gas wie insbesondere Edelgase oder durch Stickstoff oder Kohlendioxid oder durch andere Gase oder durch ein Gemisch aus diesen Gasen als Schäumungsgas bzw. Prozessgas für den Spritzgießprozess realisiert.

Gemäß einer Ausführungsform der Erfindung weist die Spritzgießanordnung eine Zwischenspeicherkammer auf, die insbesondere gasdicht mit dem Passagenausgang der Schleusungspassage der Dosieranordnung und dem Granulateingang der Spritzgießvorrichtung verbunden ist, um Granulat aus der Schleusungskammer über die Zwischenspeicherkammer dem Granulateingang der Spritzgießvorrichtung zuzuführen. Durch die Zwischenspeicherkammer wird vorteilhaft eine ununterbrochene Versorgung der Spritzgießvorrichtung mit Granulat gewährleistet.

Gemäß einer weiteren Ausführungsform der Erfindung ist die Gaszuführvorrichtung an die Zwischenspeicherkammer angeschlossen, um das Schäumungsgas gemeinsam mit Granulat über den Granulateingang der Spritzgießvorrichtung zuzuführen. Durch diese 2-phasige (fest/gasförmig) Beladung der Spritzgießvorrichtung unter definiertem konstantem Gasdruck (zweites Druckniveau) kommt es von Anfang an des Spritzgießprozesses zu einer guten Durchmischung von Granulat und Schäumungsgas, wodurch nach Plastifizierung des Feststoffs bzw. Granulats und weiterer Durchmischung mit dem Schäumungsgas ein homogenes Gemisch bzw. eine 1-phasige Lösung einer Feststoffschmelze und des Schäumungsgases als Spritzgut entsteht.

Bevorzugt ist die Spritzgießvorrichtung vom Granulateingang bis zum Spritzgutausgang gegen Gasaustritt abgedichtet. Dies reduziert bzw. verhindert vorteilhaft einen Austritt von Schäumungsgas, wodurch die Prozesskosten reduziert werden und außerdem die Aufrechterhaltung stabiler Druckverhältnisse im gesamten Spritzgießprozess bis zur Spritzgutausgabe und damit die Qualität des geschäumten Formteils vorteilhaft begünstigt werden.

Gemäß der Erfindung weist ein Spritzgießverfahren zum unter Verwendung von Granulat als Ausgangsmaterial Spritzgießen eines geschäumten Formteils, insbesondere unter Verwendung einer Spritzgießanordnung gemäß einer, mehreren oder allen zuvor beschriebenen Ausführungsformen der Erfindung in jeder denkbaren Kombination, zumindest die folgenden Schritte auf: Bereitstellen einer Spritzgießvorrichtung mit einem Granulateingang zum Zuführen von Granulat, einem Plastifizierungsbereich zum Plastifizieren von über den Granulateingang zugeführtem Granulat, um ein spritzgießbereites Spritzgut herzustellen, und einem Spritzgutausgang zum Einspritzen des Spritzgutes in eine das Formteil definierende Spritzgießform; dosiertes Bereitstellen von Granulat in einem auf Umgebungsdruckniveau befindlichen Bereich; Zuführen eines Schäumungsgases an den Granulateingang, so dass am Granulateingang ein vorbestimmtes gegenüber dem Umgebungsdruckniveau erhöhtes Arbeitsdruckniveau an Schäumungsgas bereitgestellt wird; mittels des Materialschleusungsverfahrens gemäß einer, mehreren oder allen zuvor beschriebenen Ausführungsformen der Erfindung in jeder denkbaren Kombination Schleusen des bereitgestellten Granulats aus dem auf Umgebungsdruckniveau befindlichen Bereich an den Granulateingang; gemeinsames Einbringen des Granulats und des Schäumungsgases in den Granulateingang der Spritzgießvorrichtung; Plastifizieren des über den Granulateingang eingebrachten Granulats und Durchmischen des plastifizierten Granulats mit dem Schäumungsgas, so dass das spritzgießbereite Spritzgut hergestellt wird; und Einspritzen des Spritzgutes in eine Kavität der Spritzgießform.

Gemäß der Erfindung sind die beiden Bereiche unterschiedlicher Druckniveaus, nämlich der auf Umgebungsdruckniveau befindliche Bereich und der auf Arbeitsdruckniveau befindliche Bereich am Granulateingang, insbesondere nur über die Materialschleusung miteinander verbunden und ansonsten gasdicht voneinander getrennt.

Dadurch, dass das erfindungsgemäße Spritzgießverfahren das erfindungsgemäße Materialschleusungsverfahren nutzt, kann bei einfacher Durchführung des Spritzgießverfahrens zuverlässig ein Gasaustausch zwischen den beiden Bereichen unterschiedlicher Druckniveaus verhindert werden.

Bevorzugt ist das Granulat von Kunststoff (Kunststoffgranulat) gebildet, wobei der Kunststoff insbesondere thermoplastischer Kunststoff ist. Im Rahmen der Erfindung sind jedoch z.B. auch Granulate aus anderen Feststoffen wie Metall, insbesondere Leichtmetall, Elastomeren, Duroplasten oder anderen plastifizierbaren Feststoffen oder aus Gemischen dieser Feststoffe denkbar.

Bevorzugt weist das Arbeitsdruckniveau des Bereichs am Granulateingang einen Druck von ca. 1 bis 50 bar auf. Bevorzugt wird das Umgebungsdruckniveau durch Luft realisiert. Bevorzugt wird das Arbeitsdruckniveau durch ein inertes Gas wie insbesondere Edelgase oder durch Stickstoff oder Kohlendioxid oder durch andere Gase oder durch ein Gemisch aus diesen Gasen als Schäumungsgas bzw. Prozessgas für den Spritzgießprozess realisiert.

Gemäß einer Ausführungsform der Erfindung wird bei dem Spritzgießverfahren die Spritzgießvorrichtung mit einer Zwischenspeicherkammer bereitgestellt, die insbesondere gasdicht mit dem Granulateingang verbunden ist, wobei beim an den Granulateingang Zuführen des Schäumungsgases dieses in die Zwischenspeicherkammer eingeleitet wird, so dass das Arbeitsdruckniveau in der Zwischenspeicherkammer bereitgestellt wird, wobei beim Schleusen des bereitgestellten Granulats aus dem auf Umgebungsdruckniveau befindlichen Bereich an den Granulateingang das Granulat aus dem auf Umgebungsdruckniveau befindlichen Bereich in die Zwischenspeicherkammer geschleust wird, und wobei beim gemeinsamen Einbringen des Granulats und des Schäumungsgases in den Granulateingang das Granulat und das Schäumungsgas aus der Zwischenspeicherkammer gemeinsam in den Granulateingang eingebracht werden.

Durch diese 2-phasige (fest/gasförmig) Beladung der Spritzgießvorrichtung unter definiertem konstantem Gasdruck (Arbeitsdruckniveau) kommt es von Anfang an des Spritzgießprozesses zu einer guten Durchmischung von Granulat und Schäumungsgas, wodurch nach Plastifizierung des Feststoffs bzw. Granulats und weiterer Durchmischung mit dem Schäumungsgas ein homogenes Gemisch bzw. eine 1-phasige Lösung einer Feststoffschmelze und des Schäumungsgases als Spritzgut entsteht.

Gemäß einer weiteren Ausführungsform der Erfindung wird bei dem Spritzgießverfahren nach einer vorbestimmten Zeitspanne nach vollständiger Einspritzung des Spritzgutes in die Kavität der Spritzgießform ein zugelassenes Ausdehnungsvolumen des Spritzgutes um ein vorbestimmtes Maß auf ein Endvolumen vergrößert, so dass ein durch das Schäumungsgas getriebenes Anwachsen einer Schaumstruktur des Formteils und eine Ausformung des Formteils zu gewünschten Endabmessungen bewirkt werden.

Hierbei kommen Verfahren wie das Gasgegendruckverfahren oder das "atmende Werkzeug" (leichtes öffnen der Spritzgießform / negativer Prägehub) in Betracht, um das Formteil kurz nach dem Einspritzen des schmelzenförmigen Spritzgutes zu expandieren und somit das Anwachsen der Schaumstruktur zu begünstigen. Dabei wachsen Mikroblasen der Schaumstruktur aufgrund des durch das Schäumungsgas erzeugten Zellinnendrucks zu größeren Blasenstrukturen heran. Die Randschichten des Spritzgutes verbleiben zu diesem Zeitpunkt bereits in kompakter Form, da die Schmelze derart abgekühlt und verfestigt ist, dass sich eine Schaumstruktur nicht mehr ausbilden kann. Das entstandene Formteil ist durch eine Integralschaumstruktur gekennzeichnet, welche bei geringerem Materialeinsatz gleiche bis bessere Eigenschaften als bei einem ungeschäumten Formteil bewirkt.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand bevorzugter Ausführungsformen und unter Bezugnahme auf die beigefügten Figuren beschrieben werden.
- Fig. 1: zeigt eine schematische Schnittansicht einer Dosieranordnung mit einer Material-schleuse gemäß einer Ausführungsform der Erfindung in einer ersten Schleusungsstufe.
- Fig. 2: zeigt eine schematische Schnittansicht der Materialschleuse von Fig. 1 in einer zweiten Schleusungsstufe.
- Fig. 3: zeigt eine schematische Schnittansicht der Materialschleuse von Fig. 1 in einer dritten Schleusungsstufe.
- Fig. 4: zeigt eine vergrößerte Teilansicht der in der dritten Schleusungsstufe befindlichen Materialschleuse von Fig. 3.
- Fig. 5: zeigt eine schematische Schnittansicht der Materialschleuse von Fig. 1 in einer vierten Schleusungsstufe.
- Fig. 6: zeigt eine schematische Schnittansicht der Materialschleuse von Fig. 1 in einer fünften Schleusungsstufe.
- Fig. 7: zeigt eine schematische Schnittansicht der Materialschleuse von Fig. 1 in einer sechsten Schleusungsstufe.
- Fig. 8: zeigt eine schematische Schnittansicht der Materialschleuse von Fig. 1 in einer siebten Schleusungsstufe.
- Fig. 9: zeigt eine schematische Schnittansicht einer Spritzgießanordnung gemäß einer Ausführungsform der Erfindung.

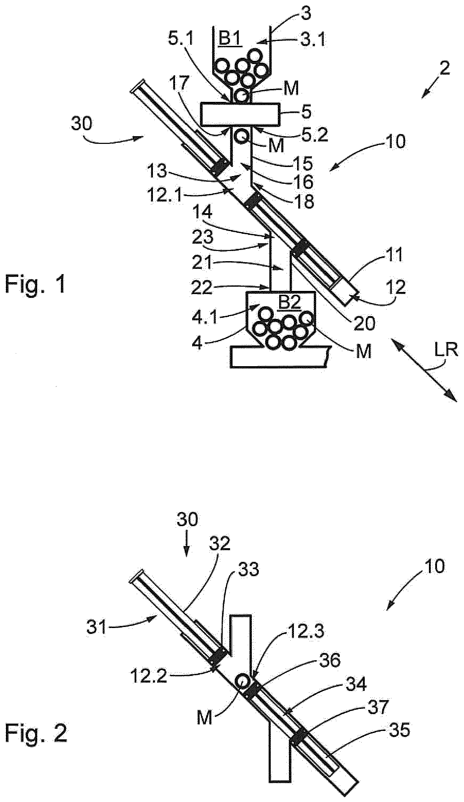

Im Folgenden wird unter Bezugnahme auf die Figuren 1 bis 9 ein erfindungsgemäßes System zum Schleusen, Dosieren und Spritzgießen von Material beschrieben werden.

Zu diesem Zwecke werden zunächst unter Bezugnahme auf die Figuren 1 bis 8 erfindungsgemäße Ausführungsformen für eine Materialschleuse zum Schleusen von Material zwischen Bereichen unterschiedlicher Druckniveaus, ein Verfahren zum Schleusen von Material zwischen Bereichen unterschiedlicher Druckniveaus sowie eine Dosieranordnung zum Überführen gewünschter Mengen von Schüttgut aus einem ein erstes Druckniveau aufweisenden ersten Bereich in einen ein sich von dem ersten Druckniveau unterscheidendes zweites Druckniveau aufweisenden zweiten Bereich beschrieben.

In diesem Zusammenhang ist zu erwähnen, dass Fig. 1 eine vollständige Darstellung der gemäß einer Ausführungsform der Erfindung ausgebildeten Dosieranordnung 2 zum Überführen gewünschter Mengen von Material M wie Schüttgut aus einem ein erstes Druckniveau P1 aufweisenden ersten Bereich B1 in einen ein sich von dem ersten Druckniveau P1 unterscheidendes zweites Druckniveau P2 aufweisenden zweiten Bereich B2 zeigt und dass die Figuren 2 bis 8 aus Übersichtlichkeitsgründen lediglich die in der Dosieranordnung 2 enthaltene Materialschleuse 10 zum Schleusen des Materials M zwischen den Bereichen unterschiedlicher Druckniveaus P1, P2 in unterschiedlichen Schleusungsstufen zeigen.

Wie insbesondere aus Fig. 1 ersichtlich, weist die Dosieranordnung 2 einen mit Granulat als Material M gefüllten Granulatspeicher 3 mit einer Granulatspeicherkammer 3.1, welche den ersten Bereich B1 bildet, eine Dosiervorrichtung 5 in Form eines gravimetrischen Schneckendosierers, die Materialschleuse 10 und einen mit Granulat als Material M zu füllenden Zwischenspeicher 4 einer Verarbeitungsvorrichtung (nicht vollständig gezeigt) für das Material M auf, wobei der Zwischenspeicher 4 eine Zwischenspeicherkammer 4.1 hat, welche den zweiten Bereich B2 bildet.

Gemäß der hier beschriebenen Ausführungsform der Erfindung weist das im ersten Bereich B1 herrschende erste Druckniveau P1 durch atmosphärische Luft gebildeten Umgebungsdruck bzw. atmosphärischen Druck auf und weist das im zweiten Bereich B2 herrschende zweite Druckniveau P2 einen durch ein Prozessgas wie ein Inertgas (z.B. Edelgas) oder Stickstoff oder Kohlendioxid oder ein anderes Gas oder durch ein Gemisch aus diesen Gasen gebildeten Druck von 1 bis 200 bar auf.

Die Dosiervorrichtung 5 weist einen Schüttguteingang 5.1, der gasdicht mit dem ersten Bereich B1 verbunden ist, und einen Schüttgutausgang 5.2 auf, wobei die Dosiervorrichtung 5 eingerichtet ist, gewünschte Mengen von schüttgutförmigem Material M aus dem ersten Bereich B1 über den Schüttguteingang 5.1 aufzunehmen und dosiert über den Schüttgutausgang 5.2 auszugeben.

Die Materialschleuse 10 weist ein erstes Schleusenteil 11, in dem eine Schleusungspassage 12 ausgebildet ist, ein zweites Schleusenteil 15, das mit dem ersten Schleusenteil 11 verbunden ist und in dem eine Schleuseneingangspassage 16 ausgebildet ist, und ein drittes Schleusenteil 20 auf, das mit dem ersten Schleusenteil 11 verbunden ist und in dem eine Schleusenausgangspassage 21 ausgebildet ist.

Die ersten bis dritten Schleusenteile 11, 15, 20 sind jeweils sich geradlinig erstreckend und rohrförmig ausgebildet, wobei das zweite und das dritte Schleusenteil 15, 20 jeweils integral an das erste Schleusenteil 11 angeformt sind, so dass die ersten bis dritten Schleusenteile 11, 15, 20 Bestandteile eines einstückigen Gehäuses bilden.

Die ersten bis dritten Schleusenteile 11, 15, 20 weisen jeweils einen kreiszylindrischen Querschnitt auf, wobei auch die Schleusungspassage 12, die Schleuseneingangspassage 16 und die Schleusenausgangspassage 21 jeweils einen kreisförmigen Querschnitt aufweisen und sich jeweils geradlinig erstrecken.

Die Schleusungspassage 12 weist einen Passageneingang 13 und einen Passagenausgang 14 auf, wobei der Passageneingang 13 und der Passagenausgang 14 in einer Längsrichtung LR der Schleusungspassage 12 mit Abstand voneinander angeordnet sind und der Passagenausgang 14 auf einem tieferen Höhenniveau angeordnet ist als der Passageneingang 13.

Genauer sind der Passageneingang 13 und der Passagenausgang 14 jeweils als Öffnung in der Wandung des die Schleusungspassage 12 aufweisenden ersten Schleusenteils 11 ausgebildet, wobei der Passageneingang 13 und der Passagenausgang 14 in Bezug auf einen Durchmesser des ersten Schleusenteils 11 diametral entgegengesetzt angeordnet sind, so dass der Passageneingang 13 nach vertikal oben weist und der Passagenausgang 14 nach vertikal unten weist.

Das erste Schleusenteil 11 erstreckt sich schräg in einen Winkel von etwa z.B. 45 Grad zur Horizontalen, so dass die Schleusungspassage 12 vom Passageneingang 13 zum Passagenausgang 14 ein Gefälle aufweist. Das zweite Schleusenteil 15 erstreckt sich vom ersten Schleusenteil 11 vertikal nach oben, und das dritte Schleusenteil 20 erstreckt sich vom ersten Schleusenteil 11 vertikal nach unten.

Die Schleuseneingangspassage 16 weist ein erstes Eingangspassagenende 17, das gasdicht mit dem Schüttgutausgang 5.2 der Dosiervorrichtung 5 und damit mit dem ersten Bereich B1 verbunden ist, und ein zweites Eingangspassagenende 18 auf, das gasdicht an den Passageneingang 13 der Schleusungspassage 12 angeschlossen ist.

Die Schleusenausgangspassage 21 weist ein erstes Ausgangspassagenende 22, das gasdicht mit dem zweiten Bereich B2 verbunden ist, und ein zweites Ausgangspassagenende 23 auf, das gasdicht an den Passagenausgang 14 der Schleusungspassage 12 angeschlossen ist.

Die Materialschleuse 10 weist außerdem eine Kolbenanordnung 30 auf, die eingerichtet ist, in der Schleusungspassage 12 eine Schleusungskammer 12.1 zu definieren, so dass die Schleusungskammer 12.1 zwei in Längsrichtung LR der Schleusungspassage 12 entgegengesetzte Längsenden 12.2, 12.3 (siehe Fig. 2) hat, welche gasdicht gegenüber einer Innenfläche der Schleusungspassage 12 abgedichtet sind.

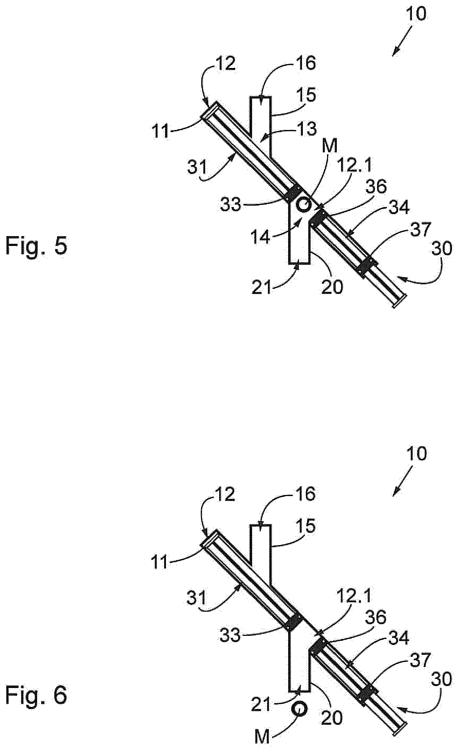

Die Kolbenanordnung 30 ist in Längsrichtung LR der Schleusungspassage 12 verschiebbar, so dass die Schleusungskammer 12.1 zwischen einer in den Figuren 1 und 2 gezeigten Aufnahmeposition, in der die Schleusungskammer 12.1 mit dem Passageneingang 13 in Verbindung steht und gasdicht von dem Passagenausgang 14 getrennt ist, und einer in den Figuren 5 und 6 gezeigten Ausgabeposition, in der die Schleusungskammer 12.1 mit dem Passagenausgang 14 in Verbindung steht und gasdicht von dem Passageneingang 13 getrennt ist, verlagerbar ist.

Zusammenfassend ist die Dosiervorrichtung 5 der Dosieranordnung 2 somit eingerichtet, gewünschte Mengen von schüttgutförmigem Material M aus dem ersten Bereich B1 über den Schüttguteingang 5.1 aufzunehmen und dosiert über den Schüttgutausgang 5.2 dem Passageneingang 13 der Materialschleuse 10 zuzuführen, wobei der Passagenausgang 14 der Materialschleuse 10 gasdicht mit dem zweiten Bereich B2 verbunden ist, so dass in der Aufnahmeposition der Schleusungskammer 12.1 über den Passageneingang 13 in die Schleusungskammer 12.1 überführtes Material M in der Ausgabeposition der Schleusungskammer 12.1 über den Passagenausgang 14 in den zweiten Bereich B2 überführbar ist.

Die Kolbenanordnung 30 weist einen ersten Kolben 31 mit einer Kolbenstange 32 und einem daran angebrachten Kolbenkopf 33, der gasdicht gegenüber der Innenfläche der Schleusungspassage 12 abdichtet, sowie einen zweiten Kolben 34 auf mit einer Kolbenstange 35 und zwei daran angebrachten Kolbenköpfen 36, 37, die über die Kolbenstange 35 starr miteinander verbunden sind und die jeweils gasdicht gegenüber der Innenfläche der Schleusungspassage 12 abdichten.

Die beiden Kolben 31, 34 sind über eine nicht gezeigte Antriebsvorrichtung selektiv gemeinsam oder einzeln antreibbar, sodass sie gemeinsam und synchron oder auch einzeln in der Schleusungspassage 12 verschoben werden können.

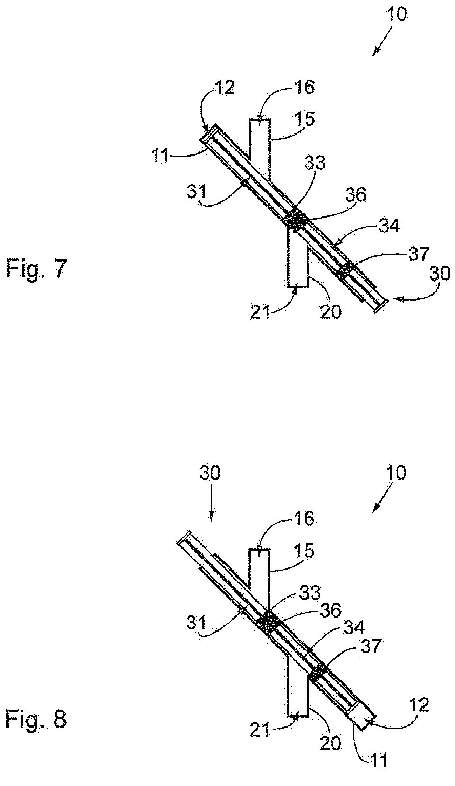

Der Kolbenkopf 33 des ersten Kolbens 31 und ein erster Kolbenkopf 36 der Kolbenköpfe 36, 37 des zweiten Kolbens 34 sind relativ zueinander in Längsrichtung LR der Schleusungspassage 12 in eine erste Stellung (siehe Figuren 1-6), in der die beiden Kolbenköpfe 33, 36 mit Abstand in Längsrichtung LR der Schleusungspassage 12 voneinander angeordnet sind, so dass zwischen den Kolbenköpfen 33, 36 die Schleusungskammer 12.1 gebildet ist, und in eine zweite Stellung (siehe Figuren 7 und 8) verschiebbar, in der die beiden Kolbenköpfe 33, 36 abstandslos in Längsrichtung LR der Schleusungspassage 12 aneinander angrenzen, so dass zwischen den Kolbenköpfen 33, 36 keine Schleusungskammer 12.1 gebildet ist.

Der zweite Kolbenkopf 37 der Kolbenköpfe 36, 37 des zweiten Kolbens 34 ist so mit Abstand in Längsrichtung LR der Schleusungspassage 12 von dem die Schleusungskammer 12.1 mitdefinierenden ersten Kolbenkopf 36 des zweiten Kolbens 34 angeordnet, dass dieser zweite Kolbenkopf 37 in der Aufnahmeposition der Schleusungskammer 12.1 bewirkt, dass der Passagenausgang 14 nur mit einem gasdicht abgeschlossenen kleinen Volumenanteil der Schleusungspassage 12 in Verbindung steht, nämlich dem durch den Längsabstand zwischen erstem und zweitem Kolbenkopf 36, 37 definierten Volumenanteil.

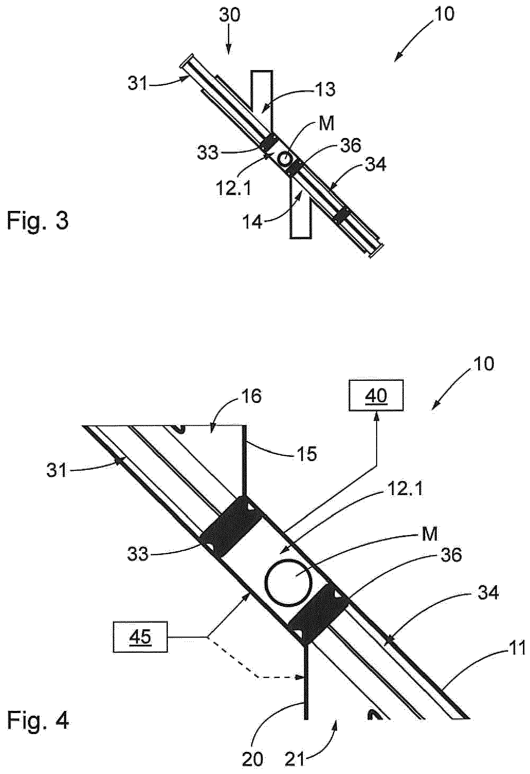

Die Kolbenanordnung 30 ist außerdem so in Längsrichtung LR der Schleusungspassage 12 verschiebbar, dass die Schleusungskammer 12.1 in eine in Längsrichtung LR der Schleusungspassage 12 zwischen der Aufnahmeposition und der Ausgabeposition angeordnete Zwischenposition (siehe Figuren 3 und 4) verbringbar ist, in der die Schleusungskammer 12.1 gasdicht sowohl von dem Passageneingang 13 als auch dem Passagenausgang 14 getrennt ist.

Wie in Fig. 4 gezeigt, weist die Materialschleuse 10 außerdem eine Gasevakuierungsvorrichtung (z.B. eine Vakuumpumpe) 40 und eine Gaszuführvorrichtung (z.B. eine gasbefüllte Druckflasche oder eine gasfördernde Druckpumpe) 45 auf.

Die Gasevakuierungsvorrichtung 40 ist in der in den Figuren 3 und 4 gezeigten Zwischenposition durch die Wandung des die Schleusungspassage 12 definierenden ersten Schleusenteils 11 hindurch an die Schleusungspassage 12 angeschlossen, so dass mittels der Gasevakuierungsvorrichtung 40 in der Zwischenposition in der Schleusungskammer 12.1 befindliche Luft aus der Schleusungskammer 12.1 evakuiert werden kann.

Die Gaszuführvorrichtung 45 ist bevorzugt in der Zwischenposition durch die Wandung des die Schleusungspassage 12 definierenden ersten Schleusenteils 11 hindurch an die Schleusungspassage 12 angeschlossen, so dass mittels der Gaszuführvorrichtung 45 in der Zwischenposition Gas (insbesondere das Prozessgas des zweiten Bereichs B2) mit einem gewünschten Druckniveau (bevorzugt mit dem zweiten Druckniveau P2 des zweiten Bereichs B2) in die Schleusungskammer 12.1 eingebracht werden kann.

Alternativ oder zusätzlich kann, wie in Fig. 4 mit Strichlinie gezeigt, die Gaszuführvorrichtung 45 durch die Wandung des die Schleusenausgangspassage 21 definierenden dritten Schleusenteils 20 hindurch an die Schleusenausgangspassage 21 angeschlossen sein.

Im Folgenden wird nun unter Bezugnahme auf die Figuren 1 bis 8 die Funktion der erfindungsgemäßen Materialschleuse 10 bzw. Dosieranordnung 2 beschrieben werden.

Zuerst werden, wie in Fig. 1 gezeigt, in der sich die Materialschleuse 10 in einer ersten Schleusungsstufe bzw. Ausgangsstellung befindet, gewünschte Mengen von z.B. schüttgutförmigem, insbesondere als Granulat ausgebildetem Material M aus dem ersten Bereich B1 (wie im Beispiel z.B. der Granulatspeicherkammer 3.1 des Granulatspeichers 3) über den Schüttguteingang 5.1 der der Dosiervorrichtung 5 aufgenommen und von der Dosiervorrichtung 5 dosiert (in Fig. 1 als einzelne Granulatkugel des Materials M dargestellt) über den Schüttgutausgang 5.2 und die Schleuseneingangspassage 16 dem Passageneingang 13 der Materialschleuse 10 zugeführt.

In einer nachfolgenden in Fig. 2 gezeigten zweiten Schleusungsstufe ist die dosierte Menge von Material M nun in die in der Aufnahmeposition befindliche Schleusungskammer bzw. temporäre Transportkammer 12.1 gefallen.

In diesem Zusammenhang ist zu erwähnen, dass, nachdem die durch die Dosiervorrichtung 5 definierte Menge von Material M in die Schleusungskammer 12.1 eingefüllt wurde, die weitere Zufuhr bzw. Dosierung von Material M durch die Dosiervorrichtung 5 temporär ausgesetzt wird. Nun bewegen sich die beiden abgedichteten Kolben 31, 34 in gleicher Geschwindigkeit bzw. synchron entlang der Rohrachse bzw. in Längsrichtung LR der Schleusungspassage 12 entlang von deren Gefälle abwärts, bis die Materialschleuse 10 eine in den Figuren 3 und 4 gezeigte dritte Schleusungsstufe erreicht. Das in der Schleusungskammer 12.1 befindliche Material M bewegt sich dabei innerhalb der Schleusungskammer 12.1 mit nach unten, bis die beiden Kolben 31, 34 in der dritten Schleusungsstufe eine Warteposition einnehmen, in der sich die Schleusungskammer 12.1 in der Zwischenposition befindet und durch die Dichtungen an den Kolbenköpfen 33, 36 abgedichtet ist, wie in den Figuren 3 und 4 gezeigt.

In der Zwischenposition bzw. dritten Schleusungsstufe kann auf unterschiedliche Weise weiter verfahren werden. Einerseits kann ohne jedwede Aktion in der Zwischenposition durchzuführen weiter in eine in Fig. 5 gezeigte vierte Schleusungsstufe gefahren werden, in der sich die Schleusungskammer 12.1 in der Ausgabeposition befindet.

Andererseits kann in der Zwischenposition bzw. dritten Schleusungsstufe mittels der Gasevakuierungsvorrichtung 40 das aus dem ersten Bereich B1 eingeschleppte Gas (z.B. Luft) aus der Schleusungskammer 12.1 ggf. bis zu einem Vakuum evakuiert werden, um die Zufuhr von Fremdgas in den zweiten Bereich B2 zu minimieren. Als Nächstes kann ggf. über die Gaszuführvorrichtung 45 das im zweiten Bereich B2 vorhandene Gas (ein Prozessgas wie z.B. ein Inertgas, Stickstoff oder Kohlendioxid oder ein Gemisch aus diesen Gasen) unter Druck (vorzugsweise mit dem zweiten Druckniveau P2) in die Schleusungskammer 12.1 eingeleitet werden. Alternativ oder zusätzlich kann, wie in Fig. 4 durch Strichlinie angedeutet, das Gas des zweiten Bereichs B2 in die Schleusenausgangspassage 21 eingeleitet werden.

Um in die nachfolgende vierte Schleusungsstufe zu gelangen, fährt die Kolbenanordnung 30 dann, wieder mit beiden Kolben 31, 34 in gleicher Geschwindigkeit bzw. synchron, entlang der Längsrichtung LR weiter abwärts des Gefälles der Schleusungspassage 12 in Richtung Passagenausgang 14, bis sich die Schleusungskammer 12.1 in der Ausgabeposition befindet, wie in Fig. 5 gezeigt. Dabei hält der Kolbenkopf 33 des oberen ersten Kolbens 31 direkt vor der Ausgangsöffnung bzw. dem Passagenausgang 14 an, während der erste Kolbenkopf 36 des unteren zweiten Kolbens 34 über die Ausgangsöffnung bzw. den Passagenausgang 14 hinwegfährt und direkt danach stoppt. In dieser Stellung kann das Material M aus der Schleusungskammer 12.1 durch den Passagenausgang 14 und die Schleusenausgangspassage 21 hindurch in den zweiten Bereich B2 (hier z.B. die Zwischenspeicherkammer 4.1 des Zwischenspeichers 4 der Verarbeitungsvorrichtung) fallen, so dass die Materialschleuse 10 in eine fünfte Schleusungsstufe gelangt, wie in Fig. 6 gezeigt.

Nachdem die Schleusungskammer 12.1 geleert wurde, fährt der erste Kolbenkopf 36 des unteren zweiten Kolbens 34 gefälleaufwärts gegen den Kolbenkopf 33 des oberen ersten Kolbens 31, so dass die Materialschleuse 10 in eine sechste Schleusungsstufe gelangt, wie in Fig. 7 gezeigt. Mit anderen Worten wird die Schleusungskammer bzw. temporäre Kammer 12.1 durch Zusammenfahren der beiden Kolben 31, 34 "aufgelöst" bzw. ein Volumen der Schleusungskammer 12.1 auf null reduziert, wodurch das Gasvolumen aus der Schleusungskammer 12.1 nach unten in Richtung zum zweiten Bereich B2 hin verdrängt wird.

Anschließend fahren die beiden Kolben 31, 34 geschlossen zur Einfüllöffnung bzw. zum Passageneingang 13 zurück, so dass die Materialschleuse 10 in eine siebte Schleusungsstufe gelangt, wie in Fig. 8 gezeigt.

Nach Erreichen der siebten Schleusungsstufe hält der erste Kolbenkopf 36 des unteren zweiten Kolbens 34 direkt vor der Einfüllöffnung bzw. dem Passageneingang 13 an, während der Kolbenkopf 33 des oberen ersten Kolbens 31 über die Einfüllöffnung bzw. den Passageneingang 13 hinwegfährt und direkt danach stoppt, so dass die Ausgangsstellung von Fig. 1 wieder hergestellt ist, in der sich die Materialschleuse 10 in der ersten Schleusungsstufe und die nun wiederhergestellte Schleusungskammer 12.1 bzw. temporäre Kammer zur erneuten Materialbeschickung bereit in der Aufnahmeposition befindet, so dass der Zyklus der Materialdosierung und Materialschleusung von neuem beginnen kann.

Aus der obigen Beschreibung von Dosieranordnung 2 und Materialschleuse 10 lässt sich ein erfindungsgemäßes Verfahren (Materialschleusungsverfahren) herleiten zum Schleusen von Material M zwischen Bereichen B1, B2 unterschiedlicher Druckniveaus P1, P2, insbesondere unter Verwendung der erfindungsgemäßen Materialschleuse 10, wobei das Materialschleusungsverfahren zumindest die folgenden Schritte aufweist: Bereitstellen der verlagerbaren Schleusungskammer 12.1 in der Aufnahmeposition, so dass die Schleusungskammer 12.1 mit dem das erste Druckniveau P1 aufweisenden ersten Bereich B1 insbesondere gasdicht in Verbindung steht und ansonsten gasdicht verschlossen ist, Befüllen der Schleusungskammer 12.1 mit Material M aus dem ersten Bereich B1, Verlagern der Schleusungskammer 12.1 in die Ausgabeposition, so dass die Schleusungskammer 12.1 mit dem das zweite Druckniveau P2 aufweisenden zweiten Bereich B2 insbesondere gasdicht in Verbindung steht und ansonsten gasdicht verschlossen ist, und Entleeren des Materials M aus der Schleusungskammer 12.1 in den zweiten Bereich B2.

Gemäß der Erfindung kann bei dem Materialschleusungsverfahren die Schleusungskammer 12.1 so verlagert werden, dass die Schleusungskammer 12.1 vor Erreichen der Ausgabeposition in die zwischen der Aufnahmeposition und der Ausgabeposition befindliche Zwischenposition verbracht wird, in der die Schleusungskammer 12.1 sowohl von dem ersten Bereich B1 als auch dem zweiten Bereich B2 gasdicht getrennt ist, wobei in der Zwischenposition ein in der Schleusungskammer 12.1 befindliches erstes Gas (z.B. Luft aus dem ersten Bereich B1) aus der Schleusungskammer 12.1 evakuiert wird.

Ferner kann gemäß der Erfindung bei dem Materialschleusungsverfahren in der Zwischenposition nach Evakuieren des ersten Gases ein sich von diesem unterscheidendes zweites Gas (bevorzugt das Gas des zweiten Bereichs B2) mit einem gewünschten Druckniveau (bevorzugt dem zweiten Druckniveau P2 des zweiten Bereichs B2) in die Schleusungskammer 12.1 eingebracht werden.

Außerdem kann gemäß der Erfindung bei dem Materialschleusungsverfahren nach in den zweiten Bereich B2 Entleeren des Materials M aus der Schleusungskammer 12.1 das Volumen der Schleusungskammer 12.1 auf null reduziert werden und kann in der Schleusungskammer 12.1 befindliches Gas bei dieser Reduzierung in den zweiten Bereich B2 abgegeben werden.

Nachfolgend wird unter Bezugnahme auf die Figuren 1 bis 9 eine erfindungsgemäße Ausführungsform einer Spritzgießanordnung 1 zum aus Granulat Herstellen eines geschäumten Formteils beschrieben werden.

In der folgenden Ausführungsform ist das Granulat von thermoplastischem Kunststoff gebildet, so dass das spritzgegossene geschäumte Formteil als ein Kunststoffformteil ausgebildet ist.

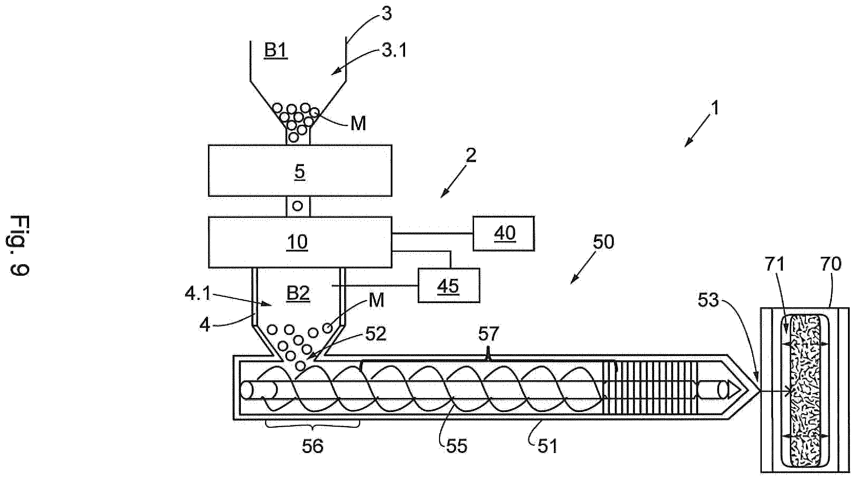

Wie in Fig. 9 gezeigt, weist die Spritzgießanordnung 1 eine wie oben beschriebene erfindungsgemäße Dosieranordnung 2 mit der Dosiervorrichtung 5, der Materialschleuse 10, welche mit der Gasevakuierungsvorrichtung 40 und der Gaszuführvorrichtung 45 ausgerüstet ist, eine Spritzgießvorrichtung 50 und eine Spritzgießform 70 auf.

Die Dosiervorrichtung 5 ist wie oben beschrieben mit einem Granulatspeicher 3 verbunden, in dessen den ersten Bereich B1 bildender Granulatspeicherkammer 3.1 aus thermoplastischem Kunststoff bestehendes Granulat als Material M gespeichert ist.

Die Spritzgießvorrichtung 50 ist von einem Extruder gebildet und weist einen wie oben mit Bezug auf die Dosieranordnung 2 beschriebenen Zwischenspeicher 4 mit einer den zweiten Bereich B2 bildenden Zwischenspeicherkammer 4.1, ein rohrförmiges Gehäuse 51, eine drehangetriebene Extruderschnecke 55, die drehbar in dem Gehäuse 51 aufgenommen ist, einen Granulateingang 52 und einen Spritzgutausgang 53 auf. Der Granulateingang 52 und der Spritzgutausgang 53 sind jeweils als Öffnung im Gehäuse 51 der Spritzgießvorrichtung 50 ausgebildet.

Die Dosieranordnung 2 ist gemäß der vorliegenden Ausführungsform eingerichtet, gewünschte Mengen von granulatförmigem Material M aus dem das erste Druckniveau P1 (hier Umgebungsdruck) aufweisenden Granulatspeicher 3 über die Materialschleuse 10 dosiert an den Granulateingang 52 zu überführen. Zu diesem Zweck ist der Zwischenspeicher 4 im Bereich des Granulateingangs 52 gasdicht an dem Gehäuse 51 angebracht. Genauer ist die Zwischenspeicherkammer 4.1 ggf. über die Schleusenausgangspassage 21 gasdicht mit dem Passagenausgang 14 der Schleusungspassage 12 der Materialschleuse 10 verbunden und gasdicht mit dem Granulateingang 52 der Spritzgießvorrichtung 50 verbunden, um granulatförmiges Material M aus der Schleusungskammer 12.1 der Materialschleuse 10 über die Zwischenspeicherkammer 4.1 dem Granulateingang 52 der Spritzgießvorrichtung 50 zuzuführen.

In dem Gehäuse 51 schließt sich an den Granulateingang 52 ein von der Extruderschnecke 55 und der Gehäuseinnenfläche gebildeter Einzugsbereich 56 für das granulatförmige Material M an. An den Einzugsbereich 56 schließt sich im Gehäuse 51 ein von der Extruderschnecke 55 und der Gehäuseinnenfläche gebildeter Plastifizierungsbereich 57 an. Der Plastifizierungsbereich 57 dient zum Plastifizieren von über den Granulateingang 52 und den Einzugsbereich 56 zugeführtem granulatförmigem Material M, um ein spritzgießbereites Spritzgut herzustellen, welches über den Spritzgutausgang 53 in die das Kunststoffformteil definierende Spritzgießform 70 eingespritzt wird.

Die Gaszuführvorrichtung 45 ist eingerichtet, ein Schäumungsgas (hier bevorzugt ein Inertgas wie Edelgas oder Stickstoff oder Kohlendioxid oder ein Gemisch aus diesen Gasen) zur Mischung mit dem Spritzgut zuzuführen, so dass an dem Granulateingang 52, d.h. in der Zwischenspeicherkammer 4.1 bzw. im zweiten Bereich B2, das gegenüber dem ersten Druckniveau P1 erhöhte zweite Druckniveau P2 an Schäumungsgas, d.h. ein Arbeitsdruckniveau von etwa 50 bar, bereitgestellt wird. Die Gaszuführvorrichtung 45 weist zu diesem Zweck neben dem in der Zwischenposition der Schleusungskammer 12.1 angeordneten Anschluss an die Schleusungspassage 12 einen Anschluss an die Zwischenspeicherkammer 4.1 auf, so dass das Schäumungsgas nach der Materialschleuse 10 und vor bzw. über dem Granulateingang 52 direkt in die Zwischenspeicherkammer 4.1 eingeleitet werden kann. Auf diese Weise kann das Schäumungsgas gemeinsam mit dem granulatförmigen Material M über den Granulateingang 52 der Spritzgießvorrichtung 50, d.h. dem Einzugsbereich 56 und dem Plastifizierungsbereich 57, zugeführt werden.

Um ein Austreten des Schäumungsgases aus der Spritzgießvorrichtung 50 zu vermeiden bzw. zu minimieren, ist die Spritzgießvorrichtung 50 vom Granulateingang 52 bis zum Spritzgutausgang 53 gegen Gasaustritt abgedichtet.

Außerdem weist die Gasevakuierungsvorrichtung 40 einen in der Zwischenposition der Schleusungskammer 12.1 angeordneten Anschluss an die Schleusungspassage 12 auf.

Im Folgenden wird nun unter Bezugnahme auf die Figuren 1 bis 9 die Funktion der erfindungsgemäßen Spritzgießanordnung 1 beschrieben werden.

Als Beispiel für die Erläuterung dient die Beschickung der abgedichteten mit dem zweiten Druckniveau P2 druckbeladenen Spritzgießvorrichtung 50 mit Thermoplastgranulat als Material M und einem Schäumungsgas als Prozessgas, um eine Kavität (Formnest) 71 der Spritzgießform 70 mit einem Polymer-Gas-Gemisch, d.h. einem Kunststoffschaum, zu füllen.

Für die Herstellung von physikalisch geschäumten Kunststoffformteilen wird zunächst ein bestimmtes granulatförmiges Grundmaterial (Material M) benötigt. Hierzu eignen sich Stoffe wie z.B. Polypropylen (PP), Polyethylen (PE) u.Ä. Auch diverse Blende, also abgestimmte Mischungen der einzelnen Stoffe, können als Material M zum Einsatz kommen.

Um dieses Material M gemäß der Erfindung zu verarbeiten, ist es notwendig das Material M mit Hilfe der erfindungsgemäßen gasdichten Materialschleuse 10 (hier als Feststoffschleuse verwendet) in den Verarbeitungsraum der Spritzgießvorrichtung 50 einzuschleusen. Dabei wird oberhalb der Materialschleuse 10 unter Normaldruck bzw. Umgebungsdruck mittels der Dosiervorrichtung 5 das Material M vordosiert und in die Materialschleuse 10 eingegeben. Die Materialschleuse 10 transportiert das Material ohne Verlust von Schäumungsgas in die Zwischenspeicherkammer 4.1. Dieser Prozess läuft sequentiell ab, wodurch ein definierter Volumenstrom an granulatförmigem Material M transportiert wird.

Bevorzugt wird in der Zwischenposition der Schleusungskammer 12.1 der Materialschleuse 10 mittels der Gasevakuierungsvorrichtung 40 Luft, welche aus der Granulatspeicherkammer 3.1 in die Schleusungskammer 12.1 eingeschleppt wurde, aus der Schleusungskammer 12.1 evakuiert und wird bevorzugt mittels der Gaszuführvorrichtung 45 Schäumungsgas auf Arbeitsdruckniveau in die Schleusungskammer 12.1 eingeleitet. Die Evakuierung der Luft ist zu bevorzugen, da im Falle des in die Spritzgießvorrichtung 50 Eindringens von Sauerstoff unerwünschte oxidative Prozesse am Kunststoff innerhalb der Spritzgießvorrichtung 50 die Folge wären.

Die Zwischenspeicherkammer 4.1 dient als kleiner Zwischenspeicher für das Material M. Außerdem findet in der Zwischenspeicherkammer 4.1 die Einleitung des Schäumungsgases bzw. Prozessgases, welches als physikalisches Treibmittel zum Aufschäumen eingesetzt wird, im gasförmigen Zustand statt. Durch die nahezu konstanten Verhältnisse, wie Druck des Schäumungsgases in der Spritzgießvorrichtung 50, ist es möglich, reproduzierbare Ergebnisse zu erzielen. Mit Anpassung der Druckverhältnisse ist es außerdem möglich, die Ausbildung der Schaumstruktur im Kunststoffformteil zu beeinflussen.

Bevor es nachfolgend zum eigentlichen Schäumungsprozess kommt, wird zunächst das bereitgestellte Material M (Kunststoffgranulat) aus der Zwischenspeicherkammer von der Extruderschnecke 55 in den Einzugsbereich 56 eingezogen. Entlang des nachfolgenden Plastifizierungsbereichs 57 wird das Material M bedingt durch Scherung und Wärmeeinwirkung aufgeschmolzen. In Verbindung mit dem Schäumungsgas und der Durchmischung durch die Extruderschnecke 55 entsteht so ein System, bestehend aus Kunststoffschmelze und Schäumungsgas, d.h. das spritzgießbereite Spritzgut.

Wird nun dieses Kunststoffschmelze-Gas-Gemisch bzw. Spritzgut in die Kavität 71 der Spritzgießform 70 eingespritzt, so bildet sich zunächst ein kompaktes Bauteil mit der Geometrie der Kavität 71. Verfahren wie das Gasgegendruckverfahren oder das "atmende Werkzeug" (leichtes öffnen der Spritzgießform 70 / negativer Prägehub) können genutzt werden, um das Bauteil kurz nach dem Einspritzen des Spritzgutes zu expandieren, also das Anwachsen der Schaumstruktur zu begünstigen, wie in Fig. 9 durch die horizontalen Doppelpfeile in der Kavität 71 angedeutet. Durch dieses Expandieren wachsen im Bauteil entstandene Mikroblasen aufgrund des durch das Schäumungsgas erzeugten Zellinnendrucks zu größeren Blasenstrukturen heran. Die Randschichten verbleiben zu diesem Zeitpunkt bereits in kompakter Form, da die Schmelze bzw. das Spritzgut derart abgekühlt und verfestigt ist, dass sich eine Schaumstruktur nicht mehr ausbilden kann.

Das entstandene geschäumte Kunststoffformteil ist durch eine Integralschaumstruktur (kompakte Randschichten mit zwischenliegendem aufgeschäumtem Kern) gekennzeichnet, welche bei geringerem Materialeinsatz gleiche bis bessere Eigenschaften als bei einem ungeschäumten Kunststoffformteil hervorbringt. So kann z.B. bei einer Materialstärke von 1 mm das Kunststoffformteil o.g. Randschichten von etwa jeweils 0,12 mm Stärke und eine zwischenliegende Schaumstruktur bzw. einen aufgeschäumten Kern von etwa 0,76 mm Stärke aufweisen.

Gemäß einem Beispiel kann für das Material M Polypropylen (PP) vorgesehen sein, welches in Bauteilen an Automobilen u.a. im Stoßfänger Verwendung findet. Um die gegebenen Eigenschaften zu verbessern, können dem Material M Langglasfasern mit 10%, bezogen auf die Gesamtmasse beigemengt sein. Diese unterstützen später u.a. den Nukleierungsprozess, also die Ausbildung der Blasenstruktur. Als Schäumungsgas bzw. Prozessgas kann Stickstoff (N₂) verwendet sein, welches mit etwa 2% bezogen auf die Gesamtmasse eingeht.

Andere Materialkombinationen sind realisierbar, jedoch sind hierfür entsprechende Grundparameter in Abhängigkeit von der Materialauswahl zu treffen.

Ein Beispiel hierfür wäre ein Fahrzeug-Spoiler aus PC+ABS-Schaum mit folgenden Grundparametern:
Material: Thermoplast
Schäumungsgas: Kohlendioxid (CO₂)
Verstärkung: 30% Langglasfasern
Gasanteil: 3% von Gesamtmasse

Ein weiteres Beispiel wären Auto-Exterieur/Interieur-Bauteile aus thermoplastisch geschäumtem Material mit folgenden Grundparametern:
Material: Thermoplaste / Elastomere / Duroplaste
Schäumungsgas: inerte Gase, Kohlendioxid (CO₂), Stickstoff (N₂), Edelgase
Verstärkung: Füll-/Verstärkungsstoffe, Talkum, Fasern, Hohlkörper, Pigmente
Gasanteil: 0,5% - 20%

Im Fazit lassen sich mit der erfindungsgemäßen Spritzgießanordnung 1 Materialschäume wie Kunststoffschäume im Spritzgießverfahren unter Berücksichtigung einer stabilen Gasatmosphäre, welche durch die gasdichte Materialschleuse 10 aufrechterhalten wird, herstellen. Die Gasbeladung von ca. 1 bis 50 bar findet unterhalb der Materialschleuse 10, jedoch oberhalb des Materialeinzuges der Spritzgießvorrichtung im 2-phasigen System (fest/gasförmig) statt. Mit Variation der Druckverhältnisse lässt sich die Beladung der Materialmasse verändern, wodurch sich unterschiedliche Schaumstrukturen realisieren lassen. Bei den Schaumstrukturen können mit variablen Randschichtdicken materialspezifische Kennwerte wie z.B. die Biegesteifigkeit eingestellt werden.

Besonders herauszustellen ist, dass mit der erfindungsgemäßen Spritzgießanordnung 1 ein spritzgegossener physikalisch geschäumter Kunststoffartikel herstellbar ist, der dadurch gekennzeichnet ist, dass er durch Verwendung einer gasverlustfrei operierenden Materialschleuse bzw. Feststoffschleuse unter definiertem Gasdruck in die Extruderschnecke 55 der Spritzgussvorrichtung geladen wird, und dadurch gekennzeichnet ist, dass die Beladung der Extruderschnecke 55 2-phasig erfolgt. Als Schäumungsgas können Kohlendioxid, Stickstoff, weitere inerte Gase und auch Gemische zum Einsatz kommen, wobei die Arbeitsdrücke im Bereich von 1-50 bar liegen können. Bei dem Spritzgussprozess wird eine stabile Gasatmosphäre sowohl im Spritzaggregat als auch in den in Gaskontakt stehenden Baugruppen aufrechterhalten, wobei gewährleistet ist, dass diese Baugruppen gasdicht abgedichtet sind, ansonsten jedoch eine herkömmliche Spritzgussmaschine mit standardmäßiger Schnecke verwendet werden kann.

Gemäß der Erfindung wird bei der Spritzgießanordnung 1 das Schäumungsgas bzw. Prozessgas bei vorgeschalteter gasverlustfrei operierender Materialschleuse (hier Feststoffschleuse) 10 über den Malerialeinzug (Einzugsbereich 56) in gasförmigem Zustand eingeführt.

Weitere Ausgestaltungen der Erfindung hinsichtlich des eingesetzten Materials M können z.B. Materialkombinationen mit Mehrkomponentenspritzguss, mit gradienten Werkstoffverläufen sein. Weitere Ausgestaltungen für erfindungsgemäße Formteile können z.B. In-Mould-Coating (IMC) beschichtete Bauteile auf geschäumtem Trägermaterial, Faserverbunddeckschichten auf geschäumtem Trägermaterial und Metalldeckschichten auf geschäumtem Trägermaterial sein.

Weitere Anwendungsmöglichkeiten für mittels der erfindungsgemäßen Spritzgießanordnung 1 hergestellte Formteile sind z.B. Kunststoffbauteile im Bereich "weiße Ware", Infotainment, Mobiliar usw., Bauteile, bei denen eine Materialersparnis bei annähernd gleichen Eigenschaften zum Vollmaterial eine große Rolle spielt, Wärmeisolationsmaterialien sowie Materialien zur akustischen Isolierung.

Aus der obigen Beschreibung der Spritzgießanordnung 1 lässt sich ein erfindungsgemäßes Spritzgießverfahren herleiten zum unter Verwendung von Granulat als Ausgangsmaterial Spritzgießen eines geschäumten Formteils, insbesondere unter Verwendung der erfindungsgemäßen Spritzgießanordnung 1, wobei das Spritzgießverfahren zumindest die folgenden Schritte aufweist: Bereitstellen der Spritzgießvorrichtung 50 mit dem Granulateingang 52 zum Zuführen von Granulat, einem Plastifizierungsbereich 57 zum Plastifizieren von über den Granulateingang 52 zugeführtem Granulat, um ein spritzgießbereites Spritzgut herzustellen, und einem Spritzgutausgang 53 zum Einspritzen des Spritzgutes in eine das Formteil definierende Spritzgießform 70; dosiertes Bereitstellen von Granulat in dem auf Umgebungsdruckniveau befindlichen Bereich (erster Bereich B1 bzw. Granulatspeicherkammer 3.1); Zuführen des Schäumungsgases an den Granulateingang 52, so dass am Granulateingang 52 das vorbestimmte gegenüber dem Umgebungsdruckniveau erhöhte Arbeitsdruckniveau an Schäumungsgas bereitgestellt wird; mittels des erfindungsgemäßen Materialschleusungsverfahrens Schleusen des bereitgestellten Granulats aus dem auf Umgebungsdruckniveau befindlichen Bereich B1 an den Granulateingang 52; gemeinsames Einbringen des Granulats und des Schäumungsgases in den Granulateingang 52 der Spritzgießvorrichtung 50; Plastifizieren des über den Granulateingang 52 eingebrachten Granulats und Durchmischen des plastifizierten Granulats mit dem Schäumungsgas, so dass das spritzgießbereite Spritzgut hergestellt wird; und Einspritzen des Spritzgutes in die Kavität 71 der Spritzgießform 70.

Gemäß der Erfindung kann bei dem Spritzgießverfahren die Spritzgießvorrichtung 50 mit der Zwischenspeicherkammer 4.1 bereitgestellt werden, die insbesondere gasdicht mit dem Granulateingang 52 verbunden ist, wobei beim an den Granulateingang 52 Zuführen des Schäumungsgases dieses in die Zwischenspeicherkammer 4.1 eingeleitet wird, so dass das Arbeitsdruckniveau in der Zwischenspeicherkammer 4.1 bereitgestellt wird, wobei beim Schleusen des bereitgestellten Granulats aus dem auf Umgebungsdruckniveau befindlichen Bereich B1 an den Granulateingang 52 das Granulat aus dem auf Umgebungsdruckniveau befindlichen Bereich B1 in die Zwischenspeicherkammer 4.1 geschleust wird, und wobei beim gemeinsamen Einbringen des Granulats und des Schäumungsgases in den Granulateingang 52 das Granulat und das Schäumungsgas aus der Zwischenspeicherkammer 4.1 gemeinsam in den Granulateingang 52 eingebracht werden.

Ferner kann gemäß der Erfindung bei dem Spritzgießverfahren nach einer vorbestimmten Zeitspanne nach vollständiger Einspritzung des Spritzgutes in die Kavität 71 der Spritzgießform 70 ein zugelassenes Ausdehnungsvolumen des Spritzgutes um ein vorbestimmtes Maß auf ein Endvolumen vergrößert werden, so dass ein durch das Schäumungsgas getriebenes Anwachsen einer Schaumstruktur des Formteils und eine Ausformung des Formteils zu gewünschten Endabmessungen bewirkt werden.

Zusammenfassend ist zu bemerken, dass die Erfindung ein System zum Schleusen, Dosieren und Spritzgießen von Material wie insbesondere Schüttgut und speziell Granulat bereitstellt, welches einfach aufgebaut ist und zuverlässig einen Gasaustausch zwischen unterschiedliche Druckniveaus P1, P2 aufweisenden Bereichen B1, B2, zwischen denen das Material M zu transportieren ist, verhindert.

### Bezugszeichenliste

- 1: Spritzgießanordnung
- 2: Dosieranordnung
- 3: Granulatspeicher
- 3.1: Granulatspeicherkammer
- 4: Zwischenspeicher
- 4.1: Zwischenspeicherkammer
- 5: Dosiervorrichtung
- 5.1: Schüttguteingang
- 5.2: Schüttgutausgang
- 10: Materialschleuse
- 11: erstes Schleusenteil
- 12: Schleusungspassage
- 12.1: Schleusungskammer
- 12.2: Längsende
- 12.3: Längsende
- 13: Passageneingang
- 14: Passagenausgang
- 15: zweites Schleusenteil
- 16: Schleuseneingangspassage
- 17: erstes Eingangspassagenende
- 18: zweites Eingangspassagenende
- 20: drittes Schleusenteil
- 21: Schleusenausgangspassage
- 22: erstes Ausgangspassagenende
- 23: zweites Ausgangspassagenende
- 30: Kolbenanordnung
- 31: erster Kolben
- 32: Kolbenstange
- 33: Kolbenkopf
- 34: zweiter Kolben
- 35: Kolbenstange
- 36: erster Kolbenkopf
- 37: zweiter Kolbenkopf
- 40: Gasevakuierungsvorrichtung
- 45: Gaszuführvorrichtung
- 50: Spritzgießvorrichtung
- 51: Gehäuse
- 52: Granulateingang
- 53: Spritzgutausgang
- 55: Extruderschnecke
- 56: Einzugsbereich
- 57: Plastifizierungsbereich
- 70: Spritzgießform
- 71: Kavität
- B1: erster Bereich
- B2: zweiter Bereich
- P1: erstes Druckniveau
- P2: zweites Druckniveau
- LR: Längsrichtung
- M: Material

## Patentansprüche

1. Materialschleuse (10) zum Schleusen von Material (M) zwischen Bereichen (B1, B2) unterschiedlicher Druckniveaus (P1, P2), aufweisend:
eine Schleusungspassage (12), die einen Passageneingang (13) zum Verbinden mit einem ein erstes Druckniveau (P1) aufweisenden ersten Bereich (B1) und einen Passagenausgang (14) zum Verbinden mit einem ein sich von dem ersten Druckniveau (P1) unterscheidendes zweites Druckniveau (P2) aufweisenden zweiten Bereich (B2) aufweist, wobei der Passageneingang (13) und der Passagenausgang (14) in einer Längsrichtung (LR) der Schleusungspassage (12) mit Abstand voneinander angeordnet sind, und
eine Kolbenanordnung (30), die eingerichtet ist, in der Schleusungspassage (12) eine Schleusungskammer (12.1) zu definieren, so dass die Schleusungskammer (12.1) zwei in Längsrichtung (LR) der Schleusungspassage (12) entgegengesetzte Längsenden (12.2, 12.3) hat, welche gasdicht gegenüber einer Innenfläche der Schleusungspassage (12) abgedichtet sind,
wobei die Kolbenanordnung (30) in Längsrichtung (LR) der Schleusungspassage (12) verschiebbar ist, so dass die Schleusungskammer (12.1) zwischen einer Aufnahmeposition, in der die Schleusungskammer (12.1) mit dem Passageneingang (13) in Verbindung steht und gasdicht von dem Passagenausgang (14) getrennt ist, und einer Ausgabeposition, in der die Schleusungskammer (12.1) mit dem Passagenausgang (14) in Verbindung steht und gasdicht von dem Passageneingang (13) getrennt ist, verlagerbar ist, und die Kolbenanordnung (30) so in Längsrichtung (LR) der Schleusungspassage (12) verschiebbar ist, dass die Schleusungskammer (12.1) in eine in Längsrichtung (LR) der Schleusungspassage (12) zwischen der Aufnahmeposition und der Ausgabeposition angeordnete Zwischenposition verbringbar ist, in der die Schleusungskammer (12.1) gasdicht sowohl von dem Passageneingang (13) als auch dem Passagenausgang (14) getrennt ist,
**dadurch gekennzeichnet, dass**
die Materialschleuse (10) eine Gasevakuierungsvorrichtung (40) aufweist, welche in der Zwischenposition an die Schleusungspassage (12) angeschlossen ist, so dass mittels der Gasevakuierungsvorrichtung (40) in der Zwischenposition ein in der Schleusungskammer (12.1) befindliches erstes Gas aus der Schleusungskammer (12.1) evakuiert werden kann.

2. Materialschleuse (10) gemäß Anspruch 1, ferner mit einer Gaszuführvorrichtung (45), welche in der Zwischenposition an die Schleusungspassage (12) angeschlossen ist, so dass mittels der Gaszuführvorrichtung (45) in der Zwischenposition ein sich von dem ersten Gas unterscheidendes zweites Gas mit einem gewünschten Druckniveau in die Schleusungskammer (12.1) eingebracht werden kann.

3. Materialschleuse (10) gemäß einem der Ansprüche 1-2, wobei die Kolbenanordnung (30) einen ersten Kolben (31) und einen zweiten Kolben (34) aufweist, die jeweils einen gasdicht gegenüber der Innenfläche der Schleusungspassage (12) abgedichteten Kolbenkopf (33, 36) haben und die relativ zueinander in Längsrichtung (LR) der Schleusungspassage (12) in eine erste Stellung, in der die beiden Kolbenköpfe (33, 36) mit Abstand in Längsrichtung (LR) der Schleusungspassage (12) voneinander angeordnet sind, so dass zwischen den Kolbenköpfen (33, 36) die Schleusungskammer (12.1) gebildet ist, und in eine zweite Stellung verschiebbar sind, in der die beiden Kolbenköpfe (33, 36) abstandslos in Längsrichtung (LR) der Schleusungspassage (12) aneinander angrenzen, so dass zwischen den Kolbenköpfen (33, 36) keine Schleusungskammer (12.1) gebildet ist.

4. Verfahren zum Schleusen von Material (M) zwischen Bereichen (B1, B2) unterschiedlicher Druckniveaus (P1, P2), aufweisend:
Bereitstellen einer verlagerbaren Schleusungskammer (12.1) in einer Aufnahmeposition, so dass die Schleusungskammer (12.1) mit einem ein erstes Druckniveau (P1) aufweisenden ersten Bereich (B1) in Verbindung steht und ansonsten gasdicht verschlossen ist,
Befüllen der Schleusungskammer (12.1) mit Material (M) aus dem ersten Bereich (B1),
Verlagern der Schleusungskammer (12.1) um eine Zwischenposition,
Verlagern der Schleusungskammer (12.1) in eine Ausgabeposition, so dass die Schleusungskammer (12.1) mit einem ein sich von dem ersten Druckniveau (P1) unterscheidendes zweites Druckniveau (P2) aufweisenden zweiten Bereich (B2) in Verbindung steht und ansonsten gasdicht verschlossen ist, und
Entleeren des Materials (M) aus der Schleusungskammer (12.1) in den zweiten Bereich (B2),
**dadurch gekennzeichnet, dass**
die Schleusungskammer (12.1) in der Zwischenposition von einem in der Schleusungskammer (12.1) befindenden ersten Gas evakuiert wird.

5. Dosieranordnung (2) zum Überführen gewünschter Mengen von Schüttgut aus einem ein erstes Druckniveau (P1) aufweisenden ersten Bereich (B1) in einen ein sich von dem ersten Druckniveau (P1) unterscheidendes zweites Druckniveau (P2) aufweisenden zweiten Bereich (B2), aufweisend:
eine Materialschleuse (10) gemäß einem der Ansprüche 1-3, und
eine Dosiervorrichtung (5) mit einem Schüttguteingang (5.1) zum Verbinden mit dem ersten Bereich (B1) und einem Schüttgutausgang (5.2), der mit dem Passageneingang (13) der Materialschleuse (10) verbunden ist,
wobei die Dosiervorrichtung (5) eingerichtet ist, gewünschte Mengen von Schüttgut aus dem ersten Bereich (B1) über den Schüttguteingang (5.1) aufzunehmen und dosiert über den Schüttgutausgang (5.2) dem Passageneingang (13) der Materialschleuse (10) zuzuführen, und
wobei der Passagenausgang (14) der Materialschleuse (10) mit dem zweiten Bereich (B2) verbunden ist, so dass in der Aufnahmeposition der Schleusungskammer (12.1) über den Passageneingang (13) in die Schleusungskammer (12.1) überführtes Schüttgut in der Ausgabeposition der Schleusungskammer (12.1) über den Passagenausgang (14) in den zweiten Bereich (B2) überführbar ist.

6. Spritzgießanordnung (1) zum Herstellen eines geschäumten Formteils aus Granulat aufweisend:
eine Spritzgießvorrichtung (50) mit einem Granulateingang (52) zum Zuführen von Granulat, einem Plastifizierungsbereich (57) zum Plastifizieren von über den Granulateingang (52) zugeführtem Granulat, um ein spritzgießbereites Spritzgut herzustellen, und einem Spritzgutausgang (53) zum Einspritzen des Spritzgutes in eine das Formteil definierende Spritzgießform (70),
eine Dosieranordnung (2) gemäß Anspruch 5, welche eingerichtet ist, gewünschte Mengen von Granulat aus einem ein erstes Druckniveau (P1) aufweisenden Granulatspeicher (3) dosiert an den Granulateingang (52) zu überführen, wobei der Passagenausgang (14) der Schleusungspassage (12) der Dosieranordnung (2) mit dem Granulateingang (52) verbunden ist, und
eine Gaszuführvorrichtung (45), die eingerichtet ist, ein Schäumungsgas zur Mischung mit dem Spritzgut zuzuführen, so dass an dem Granulateingang (52) ein gegenüber dem ersten Druckniveau (P1) erhöhtes zweites Druckniveau (P2) an Schäumungsgas bereitgestellt wird.

7. Spritzgießanordnung (1) gemäß Anspruch 6, wobei die Spritzgießvorrichtung (50) außerdem eine Zwischenspeicherkammer (4.1) aufweist, die mit dem Passagenausgang (14) der Schleusungspassage (12) der Dosieranordnung (2) und dem Granulateingang (52) der Spritzgießvorrichtung (50) verbunden ist, um Granulat aus der Schleusungskammer (12.1) über die Zwischenspeicherkammer (4.1) dem Granulateingang (52) der Spritzgießvorrichtung (50) zuzuführen, und wobei die Gaszuführvorrichtung (45) an die Zwischenspeicherkammer (4.1) angeschlossen ist, um das Schäumungsgas gemeinsam mit Granulat aus der Zwischenspeicherkammer (4.1) über den Granulateingang (52) der Spritzgießvorrichtung (50) zuzuführen.

8. Spritzgießverfahren zum Spritzgießen eines geschäumten Formteils unter Verwendung von Granulat als Ausgangsmaterial aufweisend:
Bereitstellen einer Spritzgießvorrichtung (50) mit einem Granulateingang (52) zum Zuführen von Granulat, einem Plastifizierungsbereich (57) zum Plastifizieren von über den Granulateingang (52) zugeführtem Granulat, um ein spritzgießbereites Spritzgut herzustellen, und einem Spritzgutausgang (53) zum Einspritzen des Spritzgutes in eine das Formteil definierende Spritzgießform (70),
dosiertes Bereitstellen von Granulat in einem auf Umgebungsdruckniveau befindlichen Bereich (B1),
Zuführen eines Schäumungsgases an den Granulateingang (52), so dass am Granulateingang (52) ein vorbestimmtes gegenüber dem Umgebungsdruckniveau erhöhtes Arbeitsdruckniveau an Schäumungsgas bereitgestellt wird,
mittels des Verfahrens gemäß Anspruch 4 Schleusen des bereitgestellten Granulats aus dem auf Umgebungsdruckniveau befindlichen Bereich (B1) an den Granulateingang (52),
gemeinsames Einbringen des Granulats und des Schäumungsgases in den Granulateingang (52) der Spritzgießvorrichtung (50),
Plastifizieren des über den Granulateingang (52) eingebrachten Granulats und Durchmischen des plastifizierten Granulats mit dem Schäumungsgas, so dass das spritzgießbereite Spritzgut hergestellt wird, und
Einspritzen des Spritzgutes in eine Kavität (71) der Spritzgießform (70).

9. Spritzgießverfahren gemäß Anspruch 8, wobei die Spritzgießvorrichtung (50) mit einer Zwischenspeicherkammer (4.1) bereitgestellt wird, die mit dem Granulateingang (52) verbunden ist, wobei beim an den Granulateingang (52) Zuführen des Schäumungsgases dieses in die Zwischenspeicherkammer (4.1) eingeleitet wird, so dass das Arbeitsdruckniveau in der Zwischenspeicherkammer (4.1) bereitgestellt wird, wobei beim Schleusen des bereitgestellten Granulats aus dem auf Umgebungsdruckniveau befindlichen Bereich (B1) an den Granulateingang (52) das Granulat aus dem auf Umgebungsdruckniveau befindlichen Bereich (B1) in die Zwischenspeicherkammer (4.1) geschleust wird, und wobei beim gemeinsamen Einbringen des Granulats und des Schäumungsgases in den Granulateingang (52) das Granulat und das Schäumungsgas aus der Zwischenspeicherkammer (4.1) gemeinsam in den Granulateingang (52) eingebracht werden.

## Claims

1. Material lock (10) for passing material (M) through a lock between regions (B1, B2) of dissimilar pressure levels (P1, P1), said material lock (10) having:
- a lock passage (12) which has a passage entry (13) for connecting to a first region (B1) that has a first pressure level (P1) and passage exit (14) for connecting to a second region (B2) that has a second pressure level (P2) that differs from the first pressure level (P1), wherein the passage entry (13) and the passage exit (14) in a longitudinal direction (LR) of the lock passage (12) are disposed at a mutual spacing; and
- a piston assembly (30) which is specified for defining a lock chamber (12.1) in the lock passage (12) such that the lock chamber (12.1) has two longitudinal ends (12.2, 12.3) that in the longitudinal direction (LR) of the lock passage (12) are opposite one another, said longitudinal ends (12.2, 12.3) being sealed in a gas-tight manner in relation to an internal face of the lock passage (12),
wherein the piston assembly (30) is displaceable in the longitudinal direction (LR) of the lock passage (12) such that the lock chamber (12.1) is repositionable between a receiving position in which the lock chamber (12.1) is connected to the passage entry (13) and is separated in a gas-tight manner from the passage exit (14), and a dispensing position in which the lock chamber (12.1) is connected to the passage exit (14) and is separated in a gas-tight manner from the passage entry (13), and the piston assembly (30) in the longitudinal direction (LR) of the lock passage (12) is displaceable such that the lock chamber (12.1) is capable of being brought to an intermediate position which in the longitudinal direction (LR) of the lock passage (2) is disposed between the receiving position and the dispensing position and in which the lock chamber (12.1) is separated in a gas-tight manner from both the passage entry (13) as well as the passage exit (14),
**characterized in that**
the material lock (10) has a gas evacuation device (40) which in the intermediate position is connected to the lock passage (12) such that, by means of the gas evacuation device (40) in the intermediate position, a first gas which is situated in the lock chamber (12.1) can be evacuated from the lock chamber (12.1).

2. Material lock (10) according to Claim 1, furthermore having a gas supply device (45) which in the intermediate position is connected to the lock passage (12) such that, by means of the gas supply device (45) in the intermediate position, a second gas which differs from the first gas can be introduced at a desired pressure level into the lock chamber (12.1).

3. Material lock (10) according to one of Claims 1 to 2, wherein the piston assembly (30) has a first piston (31) and a second piston (34), said pistons (31, 34) having in each case one piston head (33, 36) which is sealed in a gas-tight manner in relation to the internal face of the lock passage (12) and said pistons (31, 34) in the longitudinal direction (LR) of the lock passage (12) being displaceable in a mutually relative manner to a first position in which the two piston heads (33, 36) in the longitudinal direction (LR) of the lock passage (12) are disposed at a mutual spacing such that the lock chamber (12.1) is formed between the piston heads (33, 36), and to a second position in which the two piston heads (33, 36) in the longitudinal direction (LR) of the lock passage (12) are mutually adjacent in a spacing-free manner such that no lock chamber (12.1) is formed between the piston heads (33, 36).

4. Method for passing material (M) through a lock between regions (B1, B2) of dissimilar pressure levels (P1, P2), said method comprising the following steps:
- providing a repositionable lock chamber (12.1) in a receiving position such that the lock chamber (12.1) is connected to a first region (B1) that has a first pressure level (P1) and otherwise is closed in a gas-tight manner;
- filling the lock chamber (12.1) with material (M) from the first region (B1);
- repositioning the lock chamber (12.1) by an intermediate position;
- repositioning the lock chamber (12.1) to a dispensing position such that the lock chamber (12.1) is connected to a second region (B2) that has a second pressure level (P2) that differs from the first pressure level (P1) and otherwise is closed in a gas-tight manner; and
- emptying the material (M) from the lock chamber (12.1) into the second region (B2),
**characterized in that**
the lock chamber (12.1) in the intermediate position is evacuated of a first gas that is situated in the lock chamber (12.1).

5. Metering assembly (2) for transferring desired quantities of bulk material from a first region (B1) that has a first pressure level (P1) to a second region (B2) that has a second pressure level (P2) that differs from the first pressure level (P1), said metering assembly (2) having:
- a material lock (10) according to one of Claims 1 to 3;
- a metering device (5) having a bulk material entry (5.1) for connecting to a first region (B1), and a bulk material exit (5.2) which is connected to the passage entry (13) of the material lock (10);
- wherein the metering device (5) is specified for receiving, by way of the bulk material entry (5.1), desired quantities of bulk material from the first region (B1) and feeding, by way of the bulk material exit (5.2), said bulk material in a metered manner to the passage entry (13) of the material lock (10); and
- wherein the passage exit (14) of the material lock (10) is connected to the second region (B2) such that bulk material that in the receiving position of the lock chamber (12.1) is transferred by way of the passage entry (13) into the lock chamber (12.1) in the dispensing position of the lock chamber (12.1) is capable of being transferred by way of the passage exit (14) into the second region (B2).

6. Injection-moulding assembly (1) for producing a foamed formed part from granulate, said injection-moulding assembly (1) having:
- an injection-moulding device (50) having a granulate entry (52) for feeding granulate, a plasticizing region (57) for plasticizing granulate fed by way of the granulate entry (52), so as to produce an injection-moulding-ready injection material, and an injection material exit (53) for injecting the injection material into an injection mould (70) that defines the formed part;
- a metering assembly (2) according to Claim 5, which is specified for transferring in a metered manner desired quantities of granulate from a granulate hopper (3) that has a first pressure level (P1) to the granulate entry (52), wherein the passage exit (14) of the lock passage (12) of the metering assembly (2) is connected to the granulate entry (52); and
- a gas supply device (45) which is specified for feeding a foaming gas for mixing with the injection material such that a second pressure level (P2) of foaming gas that is elevated in relation to the first pressure level (P1) is provided at the granulate entry (52).

7. Injection-moulding assembly (1) according to Claim 6, wherein the injection-moulding device (50) moreover has an intermediate storage chamber (4.1) which is connected to the passage exit (14) of the lock passage (12) of the metering assembly (2) and to the granulate entry (52) of the injection-moulding device (50) so as to, by way of the intermediate storage chamber (4.1), feed granulate from the lock chamber (12.1) to the granulate entry (52) of the injection-moulding device (50), and wherein the gas supply device (45) is connected to the intermediate storage chamber (4.1) so as to feed the foaming gas, conjointly with the granulate, from the intermediate storage chamber (4.1) by way of the granulate entry (52) to the injection-moulding device (50).

8. Injection-moulding method for injection moulding a foamed formed part while using granulate as the initial material, said injection-moulding method comprising the following steps:
- providing an injection-moulding device (50) having a granulate entry (52) for feeding granulate, a plasticizing region (57) for plasticizing granulate fed by way of the granulate entry (52), so as to produce an injection-moulding-ready injection material, and an injection material exit (53) for injecting the injection material into an injection mould (70) that defines the formed part;
- providing in a metered manner granulate in a region (B1) that is at an ambient pressure level;
- feeding a foaming gas to the granulate entry (52) such that a predetermined operating level of foaming gas that is elevated in relation to the ambient pressure is provided at the granulate entry (52);
- by means of the method according to Claim 4 passing the provided granulate through the lock from the region (B1) that is at the ambient pressure level to the granulate entry (52);
- conjointly introducing the granulate and the foaming gas into the granulate entry (52) of the injection-moulding device (50);
- plasticizing the granulate introduced by way of the granulate entry (52) and mixing the plasticized granulate with the foaming gas such that the injection-moulding-ready injection material is produced; and
- injecting the injection material into a cavity (71) of the injection mould (70).

9. Injection-moulding method according to Claim 8, wherein the injection-moulding device (50) is provided having an intermediate storage chamber (4.1) which is connected to the granulate entry (52), wherein, when feeding the foaming gas at the granulate entry (52), said foaming gas is directed into the intermediate storage chamber (4.1) such that the operating pressure level in the intermediate storage chamber (4.1) is provided, wherein, when passing the provided granulate through the lock from the region (B1) that is at the ambient pressure level to the granulate entry (52), the granulate from the region (B1) that is at the ambient pressure level is passed through the lock into the intermediate storage chamber (4.1), and wherein, when conjointly introducing the granulate and the foaming gas into the granulate entry (52), the granulate and the foaming gas from the intermediate storage chamber (4.1) are conjointly introduced into the granulate entry (52).

## Revendications

1. Écluse pour matière (10) destinée à écluser de la matière (M) entre des zones (B1, B2) de différents niveaux de pression (P1, P2), présentant :
un passage d'éclusage (12) qui comprend une entrée de passage (13) pour le raccordement à une première zone (B1) présentant un premier niveau de pression (P1) et une sortie de passage (14) pour le raccordement à une deuxième zone (B2) présentant un deuxième niveau de pression (P2) différent du premier niveau de pression (P1), l'entrée de passage (13) et la sortie de passage (14) étant disposées dans une direction longitudinale (LR) du passage d'éclusage (12) à distance l'une de l'autre, et
un agencement de piston (30) qui est prévu pour définir dans le passage d'éclusage (12) une chambre d'éclusage (12.1), de telle sorte que la chambre d'éclusage (12.1) présente deux extrémités longitudinales (12.2, 12.3) opposées dans la direction longitudinale (LR) du passage d'éclusage (12), lesquelles sont étanchéifiées de manière étanche aux gaz par rapport à une surface intérieure du passage d'éclusage (12),
l'agencement de piston (30) pouvant être déplacé dans la direction longitudinale (LR) du passage d'éclusage (12), de telle sorte que la chambre d'éclusage (12.1) puisse être déplacée entre une position de réception dans laquelle la chambre d'éclusage (12.1) est en liaison avec l'entrée de passage (13) et est séparée de manière étanche aux gaz de la sortie de passage (14), et une position de décharge dans laquelle la chambre d'éclusage (12.1) est en liaison avec la sortie de passage (14) et est séparée de manière étanche aux gaz de l'entrée de passage (13), et l'agencement de piston (30) pouvant être déplacé dans la direction longitudinale (LR) du passage d'éclusage (12) de telle sorte que la chambre d'éclusage (12.1) puisse être amenée dans une position intermédiaire disposée dans la direction longitudinale (LR) du passage d'éclusage (12) entre la position de réception et la position de décharge, dans laquelle la chambre d'éclusage (12.1) est séparée de manière étanche aux gaz à la fois de l'entrée de passage (13) et de la sortie de passage (14),
**caractérisée en ce que**
l'écluse pour matière (10) présente un dispositif d'évacuation de gaz (40) qui, dans la position intermédiaire, est raccordé au passage d'éclusage (12), de telle sorte qu'au moyen du dispositif d'évacuation de gaz (40), dans la position intermédiaire, un premier gaz se trouvant dans la chambre d'éclusage (12.1) puisse être évacué hors de la chambre d'éclusage (12.1).

2. Écluse pour matière (10) selon la revendication 1, comprenant en outre un dispositif d'alimentation en gaz (45) qui, dans la position intermédiaire, est raccordé au passage d'éclusage (12), de telle sorte qu'au moyen du dispositif d'alimentation en gaz (45), dans la position intermédiaire, un deuxième gaz différent du premier gaz puisse être introduit avec un niveau de pression souhaité dans la chambre d'éclusage (12.1).

3. Écluse pour matière (10) selon l'une des revendications 1 et 2, dans laquelle l'agencement de piston (30) présente un premier piston (31) et un deuxième piston (34) qui présentent chacun une tête de piston (33, 36) étanchéifiée de manière étanche aux gaz par rapport à la surface interne du passage d'éclusage (12) et qui sont déplaçables l'un par rapport à l'autre dans la direction longitudinale (LR) du passage d'éclusage (12) dans une première position dans laquelle les deux têtes de piston (33, 36) sont disposées à distance l'une de l'autre dans la direction longitudinale (LR) du passage d'éclusage (12), de telle sorte qu'entre les têtes de piston (33, 36), soit formée la chambre d'éclusage (12.1), et dans une deuxième position dans laquelle les deux têtes de piston (33, 36) sont adjacentes l'une à l'autre sans espace dans la direction longitudinale (LR) du passage d'éclusage (12) de telle sorte qu'aucune chambre d'éclusage (12.1) ne soit formée entre les têtes de piston (33, 36).

4. Procédé d'éclusage de matière (M) entre des zones (B1, B2) de niveaux de pression différents (P1, P2), présentant :
la fourniture d'une chambre d'éclusage (12.1) déplaçable dans une position de réception de telle sorte que la chambre d'éclusage (12.1) soit en liaison avec une première zone (B1) présentant un premier niveau de pression (P1) et sinon soit fermée de manière étanche aux gaz,
remplissage de la chambre d'éclusage (12.1) avec la matière (M) provenant de la première zone (B1),
déplacement de la chambre d'éclusage (12.1) dans une position intermédiaire
déplacement de la chambre d'éclusage (12.1) dans une position de décharge de telle sorte que la chambre d'éclusage (12.1) soit en liaison avec une deuxième zone (B2) présentant un deuxième niveau de pression (P2) différent du premier niveau de pression (P1) et sinon soit fermée de manière étanche aux gaz, et
vidange de la matière (M) hors de la chambre d'éclusage (12.1) dans la deuxième zone (B2),
**caractérisé en ce que**
la chambre d'éclusage (12.1), dans la position intermédiaire, est vidée d'un premier gaz se trouvant dans la chambre d'éclusage (12.1).

5. Agencement de dosage (2) pour transférer des quantités souhaitées de matière en vrac d'une première zone (B1) présentant un premier niveau de pression (P1) dans une deuxième zone (B2) présentant un deuxième niveau de pression (P2) différent du premier niveau de pression (P1), présentant :
une écluse pour matière (10) selon l'une quelconque des revendications 1 à 3, et
un dispositif de dosage (5) comprenant une entrée de matière en vrac (5.1) pour la connexion à la première zone (B1) et une sortie de matière en vrac (5.2) qui est connectée à l'entrée de passage (13) de l'écluse pour matière (10),
le dispositif de dosage (5) étant prévu pour recevoir des quantités souhaitées de matière en vrac provenant de la première zone (B1) par le biais de l'entrée de matière en vrac (5.1) et pour les acheminer de manière dosée par le biais de la sortie de matière en vrac (5.2) à l'entrée de passage (13) de l'écluse pour matière (10), et
la sortie de passage (14) de l'écluse pour matière (10) étant connectée à la deuxième région (B2) de telle sorte que la matière en vrac transférée par le biais de l'entrée de passage (13) dans la chambre d'éclusage (12.1) dans la position de réception de la chambre d'éclusage (12.1) puisse être transférée dans la position de décharge de la chambre d'éclusage (12.1) par le biais de la sortie de passage (14) dans la deuxième zone (B2).

6. Agencement de moulage par injection (1) pour la fabrication d'une pièce moulée moussée constituée de granulat, présentant :
un dispositif de moulage par injection (50) avec une entrée de granulat (52) pour l'alimentation en granulat, une région de plastification (57) pour la plastification de granulat acheminé par le biais de l'entrée de granulat (52), afin de fabriquer un produit d'injection prêt au moulage par injection, et une sortie de produit d'injection (53) pour l'injection du produit d'injection dans un moule de moulage par injection (70) définissant la pièce moulée,
un agencement de dosage (2) selon la revendication 5, qui est prévu pour transférer des quantités souhaitées de granulat provenant d'un stock de granulat (3) présentant un premier niveau de pression (P1) de manière dosée à l'entrée de granulat (52), la sortie de passage (14) du passage d'éclusage (12) du dispositif de dosage (2) étant connectée à l'entrée de granulat (52), et
un dispositif d'alimentation en gaz (45) qui est prévu pour acheminer un gaz de moussage en vue du mélange avec le produit d'injection de telle sorte qu'au niveau de l'entrée de granulat (52) soit fourni un deuxième niveau de pression (P2) de gaz de moussage supérieur au premier niveau de pression (P1).

7. Agencement de moulage par injection (1) selon la revendication 6, dans lequel le dispositif de moulage par injection (50) présente en outre une chambre de stockage intermédiaire (4.1) qui est connectée à la sortie de passage (14) du passage d'éclusage (12) du dispositif de dosage (2) et à l'entrée de granulat (52) du dispositif de moulage par injection (50), afin d'acheminer du granulat provenant de la chambre d'éclusage (12.1) par le biais de la chambre de stockage intermédiaire (4.1) à l'entrée de granulat (52) du dispositif de moulage par injection (50), et le dispositif d'alimentation en gaz (45) étant raccordé à la chambre de stockage intermédiaire (4.1) afin d'acheminer le gaz de moussage conjointement avec le granulat hors de la chambre de stockage intermédiaire (4.1) par le biais de l'entrée de granulat (52) du dispositif de moulage par injection (50).

8. Procédé de moulage par injection pour le moulage par injection d'une pièce moulée moussée en utilisant du granulat en tant que matériau de départ, présentant :
la fourniture d'un dispositif de moulage par injection (50) avec une entrée de granulat (52) pour l'alimentation en granulat, une zone de plastification (57) pour plastifier le granulat acheminé par le biais de l'entrée de granulat (52), afin de produire un produit d'injection prêt au moulage par injection, et une sortie de produit d'injection (53) pour l'injection du produit d'injection dans un moule de moulage par injection (70) définissant la pièce moulée,
la fourniture dosée de granulat dans une zone (B1) se trouvant à un niveau de pression ambiante,
l'alimentation de gaz de moussage à l'entrée de granulat (52) de telle sorte qu'un niveau de pression de travail de gaz de moussage prédéterminé supérieur au niveau de pression ambiante soit fourni au niveau de l'entrée de granulat (52),
au moyen du procédé selon la revendication 4, l'éclusage du granulat fourni provenant de la zone (B1) se trouvant au niveau de pression ambiante à l'entrée de granulat (52),
l'introduction conjointe du granulat et du gaz de moussage dans l'entrée de granulat (52) du dispositif de moulage par injection (50),
la plastification du granulat introduit par le biais de l'entrée de granulat (52) et le mélange du granulat plastifié avec le gaz de moussage de telle sorte que le produit d'injection prêt au moulage par injection soit produit, et
l'injection du produit d'injection dans une cavité (71) du moule de moulage par injection (70).

9. Procédé de moulage par injection selon la revendication 8, dans lequel le dispositif de moulage par injection (50) est fourni avec une chambre de stockage intermédiaire (4.1) qui est connectée à l'entrée de granulat (52), lors de l'alimentation au niveau de l'entrée de granulat (52) du gaz de moussage, celui-ci étant introduit dans la chambre de stockage intermédiaire (4.1) de telle sorte que le niveau de pression de travail dans la chambre de stockage intermédiaire (4.1) soit obtenu, lors de l'éclusage du granulat fourni provenant de la zone (B1) se trouvant au niveau de pression ambiante dans l'entrée de granulat (52), le granulat provenant de la zone (B1) se trouvant au niveau de pression ambiante étant éclusé dans la chambre de stockage intermédiaire (4.1), et lors de l'introduction en commun du granulat et du gaz de moussage dans l'entrée de granulat (52), le granulat et le gaz de moussage provenant de la chambre de stockage intermédiaire (4.1) étant introduits en commun dans l'entrée de granulat (52) .
